# EUROPEAN PATENT APPLICATION

(11) **EP 4 585 438 A1**
(43) Date of publication of application: **16.07.2025**
(21) Application number: 23862948.9
(22) Date of filing: 24.08.2023
(51) Int. Cl.: B60K 1/04, B60K 6/24, B60K 6/405, B60K 6/46, B60K 11/06, B60K 15/063, B60L 50/61, B61C 5/00, B61C 5/02, F01M 1/02, F01P 7/02, F02B 63/04, F02D 19/02, F02D 25/00, F02D 29/02, F02D 29/06, F02D 41/02, F02D 41/28, F02M 21/02, H02K 7/18

(54) **POWER GENERATION UNIT AND POWER GENERATION SYSTEM**

(30) Priority: 05.09.2022 JP 2022140954; 05.09.2022 JP 2022140955; 29.03.2023 JP 2023052846
(71) Applicant: Kawasaki Motors, Ltd., Akashi, Hyogo 673-8666 (JP)
(72) Inventor: IZUMI, Kyohei, Akashi-shi, Hyogo 673-8666 (JP); MATSUDA, Yoshimoto, Akashi-shi, Hyogo 673-8666 (JP)
(74) Representative: Witte, Weller & Partner Patentanwälte mbB
(86) International application number: PCT/JP2023/030447
(87) International publication number: WO 2024/053409

(57) **Abstract**

A power generation unit includes: an internal combustion engine; a power generator that generates electric power by an output of the internal combustion engine; and a support structural body that supports both of the internal combustion engine and the power generator and includes a detachable structure that is attachable to and detachable from an attached body.

## Description

### Technical Field

### Cross-Reference To Related Applications

This application claims priority to and the benefit of Japanese Patent Application Nos. 2022-140954 and 2022-140955 filed on September 5, 2022, and Japanese Patent Application No. 2023-052846 filed on March 29, 2023, the entire disclosures of which are incorporated herein by reference.

### Field

The present disclosure relates to a power generation unit and a power generation system.

### Background Art

PTL 1 discloses a vehicle which: includes an internal combustion engine that can operate by using hydrogen as fuel; and travels in such a manner that the rotation of an output shaft rotated by the internal combustion engine is transmitted to a driving wheel.

### Citation List

### Patent Literature

PTL 1: Japanese Laid-Open Patent Application Publication No. 2008-038680

### Summary of Invention

### Technical Problem

When there is an abnormality of the internal combustion engine or when performing maintenance work, such as periodic inspection, activity performed by a system including the internal combustion engine is stopped.

An object of one aspect of the present disclosure is to provide a power generation unit and a power generation system which facilitate a system maintenance method.

### Solution to Problem

A power generation unit according to one aspect of the present disclosure includes: an internal combustion engine; a power generator that generates electric power by an output of the internal combustion engine; and a support structural body that supports both of the internal combustion engine and the power generator and includes a detachable structure that is attachable to and detachable from an attached body.

A power generation system according to one aspect of the present disclosure includes: a power generation unit including an internal combustion engine, a power generator that generates electric power by an output of the internal combustion engine, and a support structural body that supports both of the internal combustion engine and the power generator and includes a detachable structure that is attachable to and detachable from an attached body; and the attached body to and from which the power generation unit is attached and detached through the detachable structure.

### Advantageous Effects of Invention

The present disclosure can provide a power generation unit and a power generation system which facilitate a system maintenance method.

### Brief Description of Drawings

FIG. 1 is a schematic configuration diagram of a movable body including a power generation unit according to Embodiment 1.
FIG. 2 is a block diagram of a drive system of the movable body of FIG. 1.
FIG. 3 is a schematic perspective view of the power generation unit that has been fixed to the movable body.
FIG. 4 is a schematic perspective view of the power generation unit that has been fixed to the movable body, when viewed in a direction different from that of FIG. 3.
FIG. 5 is a schematic top view of the power generation unit that has been fixed to the movable body.
FIG. 6 is a schematic side sectional view of the power generation unit that has been fixed to the movable body.
FIG. 7 is a schematic perspective view of the power generation unit that has been unlocked from the movable body.
FIG. 8 is a schematic enlarged perspective view of a unit lock mechanism.
FIG. 9 is a diagram for explaining the power generation unit according to Embodiment 2.
FIG. 10 is a schematic enlarged side sectional view for explaining the unit lock mechanism of FIG. 9.
FIG. 11 is a diagram for explaining the power generation unit according to Embodiment 3.
FIG. 12 is a diagram for explaining the power generation unit according to Embodiment 4.

### Description of Embodiments

Hereinafter, embodiments will be described with reference to the drawings.

### Embodiment 1

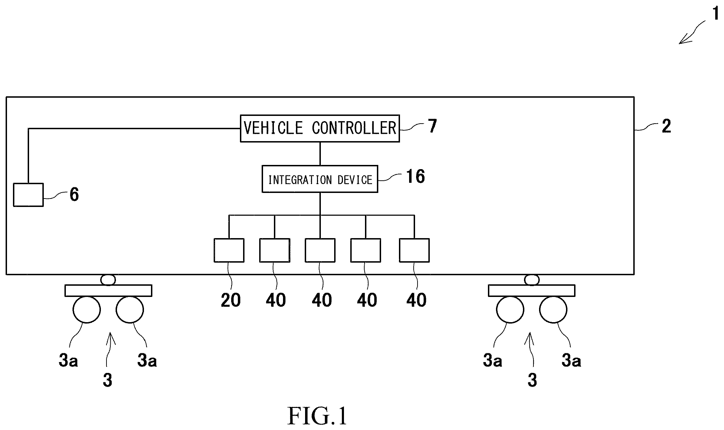

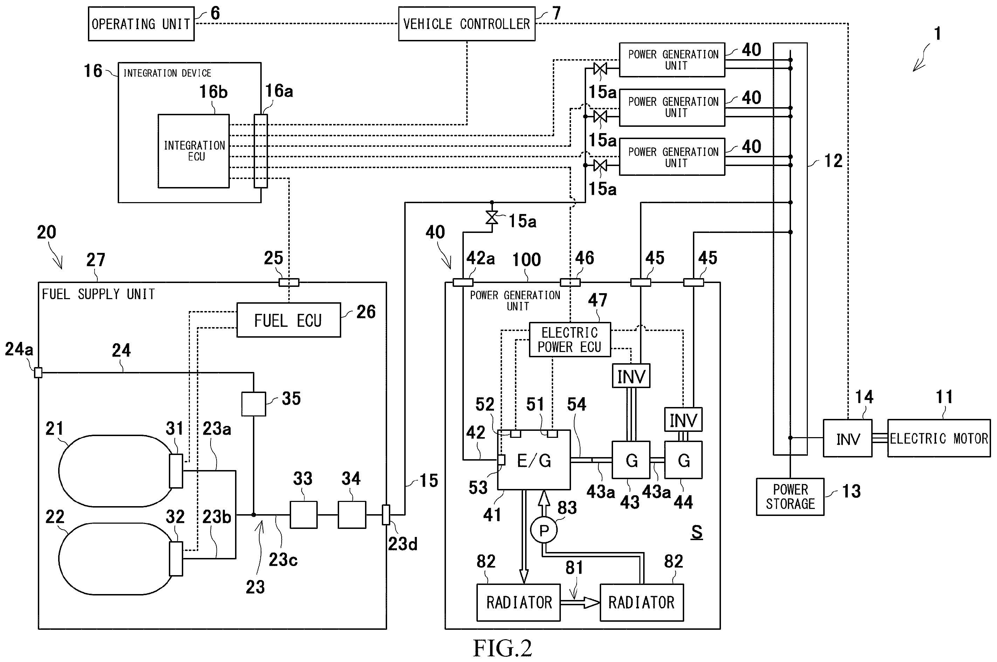

FIG. 1 is a schematic configuration diagram of a movable body 1 including a power generation unit 40 according to Embodiment 1. In the present embodiment, the movable body 1 is a railcar, for example. The movable body 1 includes: a vehicle body 2; and a pair of bogies 3 which are respectively located close to both longitudinal-direction end portions of the vehicle body 2 and support the vehicle body 2. Each of the bogie 3 includes wheels 3a. Two wheels 3a lined up with a space in a vehicle width direction are coupled to each other by an axle. The movable body 1 is an electric vehicle. The movable body 1 includes at least one electric motor 11 (see FIG. 2) that is a traveling power generator. An output shaft of the electric motor 11 is coupled to at least one wheel 3a through a power transmission mechanism.

The movable body 1 includes an operating unit 6 and a vehicle controller 7 configured to be communicable with the operating unit 6. The operating unit 6 includes one or more levers and/or one or more handles which are located in a driver's cab. A request command is sent from the operating unit 6 to the vehicle controller 7 in accordance with an operation input from a driver to the operating unit 6. The operating unit 6 includes: a traveling operating unit to which a traveling command is input; a braking command unit to which a braking command is input; and the like.

The vehicle controller 7 includes a processor, a system memory, and a storage memory. Based on the request command received from the operating unit 6, the vehicle controller 7 generates an output command for controlling the electric motor 11 mounted on the movable body 1. Moreover, the vehicle controller 7 sends the output command to an inverter 14 (see FIG. 2) that controls an output of the electric motor 11.

The movable body 1 includes at least one power generation unit 40, at least one fuel supply unit 20, and an integration device 16. The fuel supply unit 20 supplies fuel to the power generation unit 40. The power generation unit 40 generates electric power. The integration device 16 integratedly manages at least one power generation unit 40 and at least one fuel supply unit 20.

FIG. 2 is a block diagram of a drive system that drives the electric motor 11. Specifically, FIG. 2 shows a fuel supply system that supplies the fuel to the power generation unit 40, a power supply system that supplies electric power generated by the power generation unit 40, and a communication system that drives the electric motor 11. For simplicity, FIG. 2 shows only one electric motor 11 included in the movable body 1. Moreover, FIG. 2 shows four power generation units 40 and one fuel supply unit 20. However, the number of power generation units 40 located at the movable body 1 and the number of fuel supply units 20 located at the movable body 1 are not limited to these.

First, elements other than the power generation unit 40 and the fuel supply unit 20 will be described. As shown in FIG. 2, the movable body 1 includes power collecting circuitry 12, a power storage 13, and the inverter 14. The power generation units 40 of the movable body 1 are electrically connected to the power collecting circuitry 12 in parallel through an electric cable or the like. The power collecting circuitry 12 collects the electric power generated by the power generation units 40.

The power generation units 40 are electrically connected to the power storage 13 through the power collecting circuitry 12. The power storage 13 stores the electric power generated by the power generation units 40. The power storage 13 is, for example, a battery or a capacitor. Moreover, the power storage 13 is electrically connected to the electric motor 11 through the inverter 14.

The inverter 14 converts DC power into AC power, adjusts the voltage of the AC power, and supplies the AC power to the electric motor 11. The inverter 14 controls the output of the electric motor 11 based on the output command sent from the vehicle controller 7.

The integration device 16 includes a communication interface 16a and an integration controller 16b. The integration controller 16b is also called an integration ECU (Electronic Control Unit) 16b. The communication interface 16a communicably connects the integration ECU 16b to the vehicle controller 7, the power generation units 40, and the fuel supply unit 20. The integration ECU 16b sends a fuel supply command to the fuel supply unit 20 and sends a power generation command to the power generation units 40 based on information received from at least one of the vehicle controller 7, the power generation units 40, and the fuel supply unit 20. Moreover, the integration ECU 16b may determine a maintenance timing of the power generation unit 40 based on information received from the power generation unit 40.

### Configuration of Fuel Supply Unit

The fuel supply unit 20 supplies a hydrogen gas as the fuel to an internal combustion engine 41 of the power generation unit 40. As shown in FIG. 2, the fuel supply unit 20 includes a first fuel tank 21, a second fuel tank 22, a supply pipe 23, a filling pipe 24, a communication interface 25, a fuel controller 26, a support structural body 27, and the like. The fuel controller 26 is also called a fuel ECU (Electronic Control Unit) 26.

The first fuel tank 21 and the second fuel tank 22 are the same in structure as each other. The first fuel tank 21 and the second fuel tank 22 store the hydrogen gas in a compressed state as a fuel gas. Each of internal pressure of the first fuel tank 21 in a full state and internal pressure of the second fuel tank 22 in a full state is higher than atmospheric pressure, and specifically, is higher than predetermined intake pressure of the internal combustion engine 41.

A first on-off valve 31 that opens and closes a port of the first fuel tank 21 is located at the first fuel tank 21. A second on-off valve 32 that opens and closes a port of the second fuel tank 22 is located at the second fuel tank 22. Each of the first on-off valve 31 and the second on-off valve 32 is an electromagnetic valve that is electrically controllable.

The supply pipe 23 is a pipe through which the fuel is supplied from the first fuel tank 21 and the second fuel tank 22 to an outside of the fuel supply unit 20. Two upstream end portions of the supply pipe 23 are respectively connected to the first fuel tank 21 and the second fuel tank 22. Moreover, one downstream end portion of the supply pipe 23 includes a supply port 23d.

More specifically, the supply pipe 23 includes a first sub supply pipe 23a, a second sub supply pipe 23b, and a main supply pipe 23c. The first sub supply pipe 23a connects the first fuel tank 21 to the main supply pipe 23c. The second sub supply pipe 23b connects the second fuel tank 22 to the main supply pipe 23c. To be specific, the first sub supply pipe 23a and the second sub supply pipe 23b branch from the main supply pipe 23c at an upstream side of the main supply pipe 23c. A downstream end portion of the main supply pipe 23c includes the supply port 23d. As described below, the supply port 23d is connected to fuel receiving ports 42a of the power generation units 40 through a connecting pipe 15. On-off valves 15a are located at the connecting pipe 15.

A pressure reducing valve 33 is located at the main supply pipe 23c. The pressure reducing valve 33 reduces the pressure of the hydrogen gas flowing through the main supply pipe 23c such that the pressure of the hydrogen gas supplied from the main supply pipe 23c to the internal combustion engine 41 is kept at predetermined intake pressure.

A shutoff valve 34 is located at a portion of the main supply pipe 23c which is located downstream of the pressure reducing valve 33. The shutoff valve 34 is located at the main supply pipe 23c so as to be able to block the supply of the hydrogen gas from the main supply pipe 23c to the internal combustion engine 41 in an emergency, for example.

The filling pipe 24 is a pipe through which the fuel is introduced into the first fuel tank 21 and the second fuel tank 22 from an outside. One end portion of the filling pipe 24 is connected to a portion of the main supply pipe 23c which is located upstream of the pressure reducing valve 33. The other end portion of the filling pipe 24 includes a filling port 24a. A check valve 35 that prevents the fuel from flowing toward the filling port 24a is located at the filling pipe 24.

The communication interface 25 communicably connects the fuel ECU 26 to the integration device 16 located outside the fuel supply unit 20. In the case of wired communication, the communication interface 25 is a detachable terminal or communication connector. In the case of wireless communication, the communication interface 25 is a known wireless communicator.

The fuel ECU 26 controls the first on-off valve 31 and the second on-off valve 32 based on a signal received from the integration device 16 through the communication interface 25. The fuel ECU 26 includes a processor, a system memory, and a storage memory. The processor includes, for example, a central processing unit (CPU). The system memory is, for example, a RAM. The storage memory may include a ROM. The storage memory may include a hard disk, a flash memory, or a combination thereof. The storage memory stores a program.

The elements 21, 22, 23, 24, 25, 26, 31, 32, 33, 34, and 35 included in the fuel supply unit 20 are fixed to each other and integrated with each other. Specifically, the elements 21, 22, 23, 24, 25, 26, 31, 32, 33, 34, and 35 included in the fuel supply unit 20 are supported by the support structural body 27 and unitized. For example, the support structural body 27 has a cuboid box shape. The elements 21, 22, 23, 24, 25, 26, 31, 32, 33, 34, and 35 (except for the support structural body 27) included in the fuel supply unit 20 are accommodated in the support structural body 27 having the box shape and are directly or indirectly connected and fixed to the support structural body 27.

The support structural body 27 is attachable to and detachable from the vehicle body 2 while supporting the fuel tanks 21 and 22. To be specific, the fuel supply unit 20 is detachably mounted on the vehicle body 2. By detaching the support structural body 27 from the vehicle body 2, the elements mounted on the support structural body 27 can be detached from the vehicle body 2 at once. The fuel supply unit 20 can be subjected to maintenance and repair after being detached from the vehicle body 2. The fuel supply unit 20 is replaceable with another fuel supply unit 20 having the same structure.

### Configuration of Power Generation Unit

The power generation unit 40 includes the internal combustion engine 41, a fuel supply pipe 42, power generators (motor generators) 43, inverters 44, electric interfaces 45, a communication interface 46, an electric power controller 47, and the like. The electric power controller 47 is also called an electric power ECU (Electronic Control Unit) 47.

The internal combustion engine 41 combusts the fuel gas and converts its combustion energy into rotational energy of a crank shaft 54. In the present embodiment, the internal combustion engine 41 is a hydrogen engine that can use the hydrogen gas as the fuel. The internal combustion engine 41 is, for example, a multiple cylinder engine.

The internal combustion engine 41 includes a throttle device 51, ignition devices 52, and fuel supply devices 53. The power generation unit 40 includes: the ignition devices 52, the number of which corresponds to the number of combustion chambers; and the fuel supply devices 53, the number of which corresponds to the number of combustion chambers. In FIG. 2, one ignition device 52 and one fuel supply device 53 are shown. The throttle device 51 adjusts an intake air amount of the internal combustion engine 41. For example, the throttle device 51 is an electronic control throttle device that opens and closes a throttle valve by a motor. The ignition device 52 ignites a fuel-air mixture in the combustion chamber of the internal combustion engine 41. The ignition device 52 is, for example, an ignition plug. The fuel supply device 53 supplies the fuel into the combustion chamber of the internal combustion engine 41. The fuel supply device 53 is, for example, an electronic control injector.

One end portion of the fuel supply pipe 42 is connected to the fuel supply device 53 of the internal combustion engine 41. The other end portion of the fuel supply pipe 42 includes the fuel receiving port 42a. More specifically, the fuel supply pipe 42 includes an injector rail and distributes the fuel, supplied from the fuel receiving port 42a, to the fuel supply devices 53. The fuel receiving port 42a may also be called a fluid interface or a fluid connector. The fuel receiving port 42a of the power generation unit 40 and the supply port 23d of the fuel supply unit 20 are connected to each other by the connecting pipe 15. The connecting pipe 15 is supported by, for example, the vehicle body 2. The supply port 23d and the fuel receiving port 42a may be directly connectable to each other. The hydrogen gas is introduced from the fuel supply unit 20 through the connecting pipe 15 and the fuel supply pipe 42 to the fuel supply device 53 of the internal combustion engine 41.

The power generators 43 generate electric power by rotational power of the internal combustion engine 41. The power generators 43 are driven by the internal combustion engine 41. In the present embodiment, rotating shafts 43a of the two power generators 43 are coupled to each other so as to rotate integrally, and one of the rotating shafts 43a of the two power generators 43 is coupled to the crank shaft 54 so as to rotate integrally with the crank shaft 54. A rotor is located at the rotating shaft 43a, and a stator is located at a position opposed to the rotor. The power generator 43 is, for example, a three-phase induction motor.

The two inverters 44 are located so as to correspond to the two power generators 43, respectively. The two inverters 44 are electrically connected to the two power generators 43, respectively. The inverter 44 converts AC power, generated by the power generator 43, into DC power. The inverter 44 may also be called a converter. For example, the inverter 44 includes inverter circuitry and control circuitry. Each of the inverter circuitry and the control circuitry is one example of "control circuitry." Moreover, the two inverters 44 are electrically connected to the two electric interfaces 45, respectively.

The electric interface 45 is an interface that supplies electric power, generated by the power generation unit 40, to an outside. The electric interface 45 electrically connects the inverter 44 of the power generation unit 40 to the power storage 13 located outside the power generation unit 40. In the case of contact power supply, the electric interface 45 is an electric power connector. In the case of non-contact power supply, the electric interface 45 is a coil. In the present embodiment, the electric interfaces 45 are located for each power generation unit 40. However, one electric interface 45 that supplies the electric power of the two power generation units 40 together to an outside may be located.

The communication interface 46 communicably connects the electric power ECU 47 to the integration device 16 located outside the power generation unit 40. In the present embodiment, in the case of wired communication, the communication interface 46 is a communication connector. The communication interface 46 is one example of an "input connector." In the case of wireless communication, the communication interface 46 is a known wireless communicator.

The electric power ECU 47 controls the internal combustion engine 41 and the inverter 44 based on the power generation command received from the integration device 16 through the communication interface 46. The electric power ECU 47 includes a processor, a system memory, and a storage memory. The processor includes, for example, a central processing unit (CPU). The system memory is, for example, a RAM. The storage memory may include a ROM. The storage memory may include a hard disk, a flash memory, or a combination thereof. The storage memory stores a program.

Moreover, the electric power ECU 47 communicates with the integration device 16 through the communication interface 46. Specifically, the electric power ECU 47 associates state information indicating a state of the power generation unit 40 with unit identification information (unit ID) for identifying the power generation unit 40, and transmits the information to the integration device 16 through the communication interface 46.

The state information includes information regarding damage over time. Moreover, the state information may include a past operation history. For example, the state information may include information regarding a rotational frequency of the internal combustion engine 41, generated torque of the internal combustion engine 41, an operation history of the internal combustion engine 41, the amount of electric power generated by the power generator 43, impact force received by the power generation unit 40 from an outside, or the life of a component of the power generation unit 40.

Moreover, the power generation unit 40 includes a cooling passage 81, radiators 82, and a cooling medium pump 83. The radiators 82 and the cooling medium pump 83 are located at the cooling passage 81. The cooling passage 81 is a circulation passage which introduces a cooling medium, discharged from the cooling medium pump 83, to the internal combustion engine 41 and returns the cooling medium, having cooled the internal combustion engine 41, to the cooling medium pump 83. The cooling medium is, for example, water. The cooling passage 81 may introduce the cooling medium to the power generator 43 and the inverter 44 such that the cooling medium cools the power generator 43 and the inverter 44. The radiators 82 release the heat of the cooling medium circulating in the cooling passage 81. The cooling medium pump 83 may be a mechanical pump that is driven in mechanical association with the rotation of the crank shaft 54 or may be an electric pump that is controlled by the electric power ECU 47. The radiator 82 is one example of a "heat exchanger." In the present embodiment, the power generation unit 40 includes two radiators 82.

The power generation unit 40 includes a support structural body 100. Various elements (except for the support structural body 100) included in the power generation unit 40 are supported by the support structural body 100 and unitized. The elements (except for the support structural body 100) included in the power generation unit 40 are directly or indirectly connected and fixed to the support structural body 100.

In the present embodiment, the support structural body 100 includes a detachable structure that is attachable to and detachable from the movable body 1. To be specific, the detachable structure of the power generation unit 40 and a detachable structure of the movable body 1 which are attachable to and detachable from each other can lock the power generation unit 40 so as to restrict the movement of the power generation unit 40 relative to the movable body 1. The detachable structure of the support structural body 100 is a boltless detachable structure that does not require fastening using a bolt and a nut.

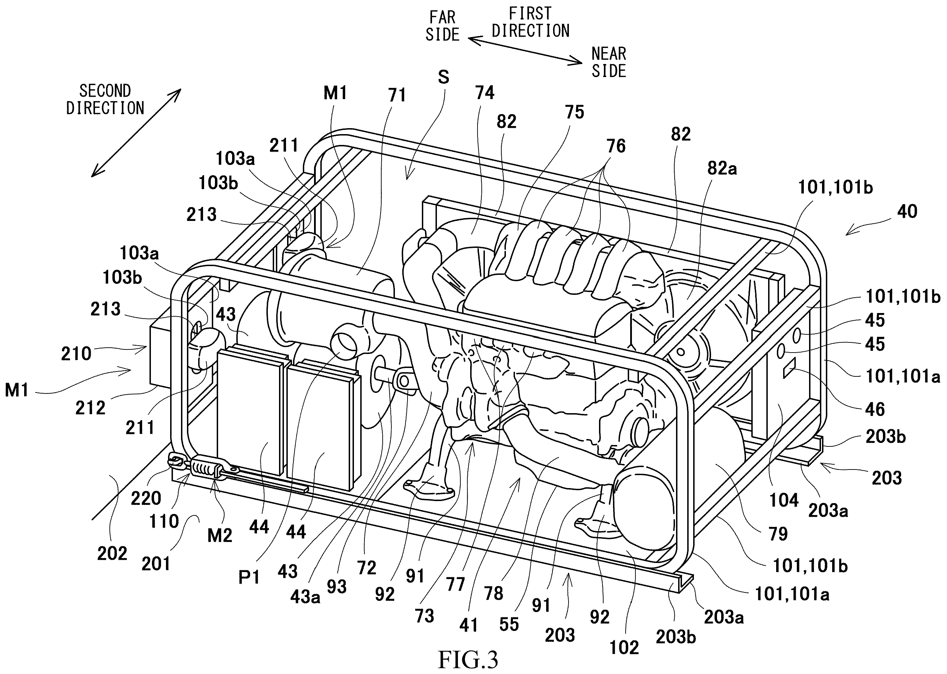

The vehicle body 2 of the movable body 1 includes a pair of guide rails 203 (see FIG. 3) that guide the power generation unit 40 to a predetermined attachment position. The pair of guide rails 203 include the above detachable structure of the movable body 1. Work of positioning the support structural body 100 at the attachment position can be facilitated in such a manner that the support structural body 100 of the power generation unit 40 is made to move along the pair of guide rails 203.

### Specific Configuration of Power Generation Unit

Next, a specific configuration of the power generation unit 40 will be described with reference to FIGS. 3 to 6. In FIGS. 3 to 6 and FIGS. 7 to 12 described below, some of the elements included in the power generation unit 40 are not shown.

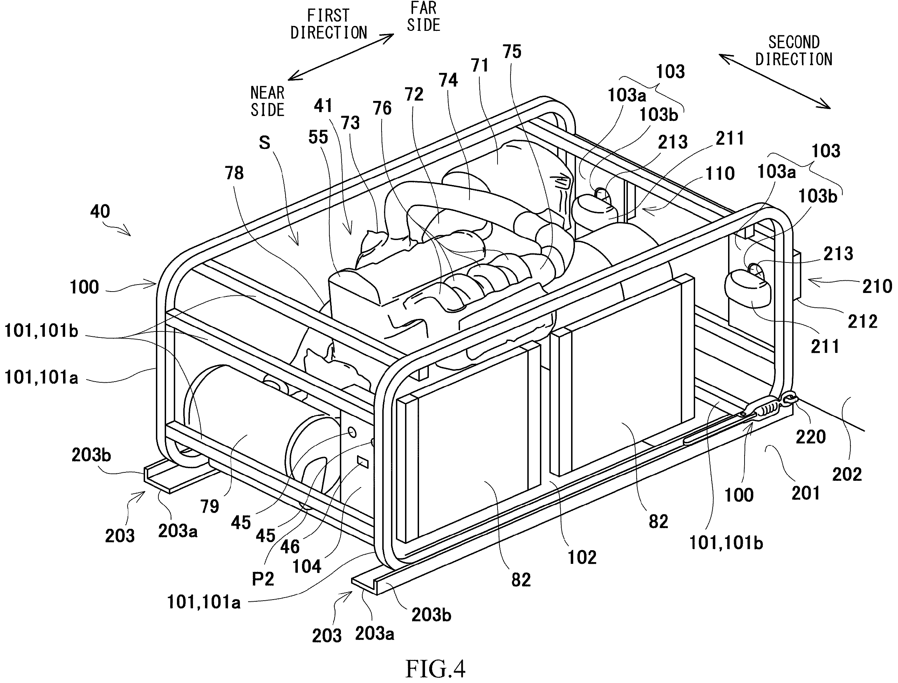

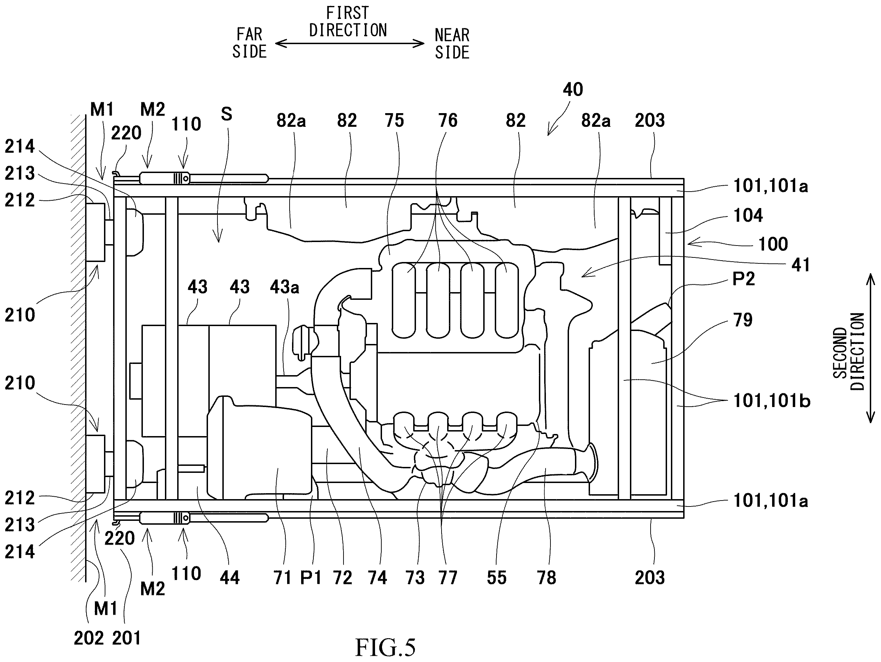

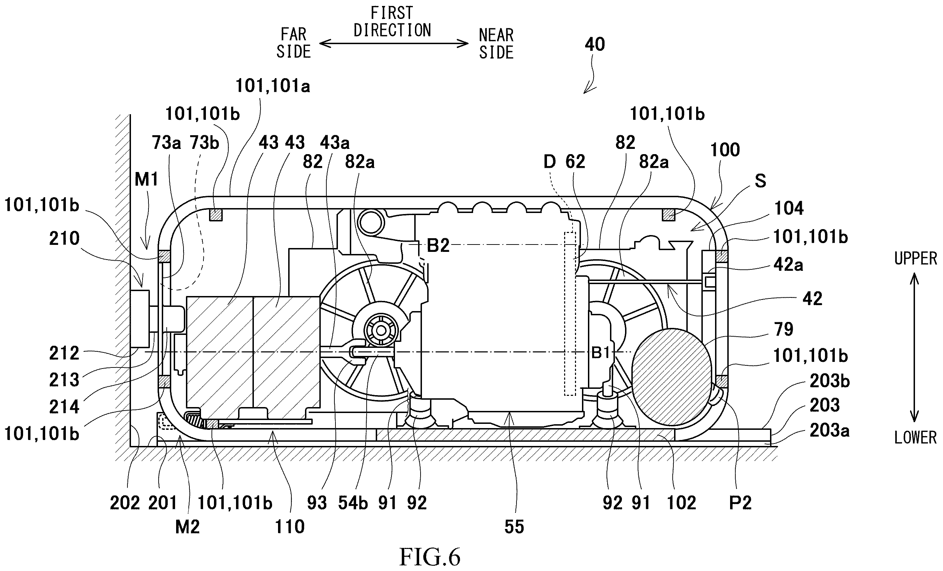

FIGS. 3 to 6 show the power generation unit 40 which is located at a predetermined installation position in the movable body 1 and has been fixed to the movable body 1. FIG. 3 is a schematic perspective view of the power generation unit 40 that has been fixed to the movable body 1. FIG. 4 is a schematic perspective view of the power generation unit 40 that has been fixed to the movable body 1, when viewed in a direction different from that of FIG. 3. FIG. 5 is a schematic top view of the power generation unit 40 that has been fixed to the movable body 1. FIG. 6 is a schematic side sectional view of the power generation unit 40 that has been fixed to the movable body 1.

In the following description, for convenience sake, a horizontal direction in which the power generation unit 40 is made to move along the guide rails 203 is defined as a first direction, and a horizontal direction orthogonal to an upper-lower direction and the first direction is defined as a second direction. Especially, a direction in which the power generation unit 40 placed on the guide rails 203 is made to move toward the attachment position is defined as a far side in the first direction, and a direction in which the power generation unit 40 is made to move away from the attachment position is defined as a near side in the first direction. A direction toward a middle between the pair of guide rails 203 in the second direction is defined as an inside in the second direction, and a direction away from the middle is defined as an outside in the second direction. In the present embodiment, a length of the power generation unit 40 in the first direction is larger than a length of the power generation unit 40 in the second direction. Therefore, the first direction of the power generation unit 40 may also be called a longitudinal direction, and the second direction of the power generation unit 40 may also be called a transverse direction.

As show in FIG. 3, in the present embodiment, the support structural body 100 includes frames 101. The frames 101 are combined with each other to have a substantially cuboid shape as a whole. The elements (except for the support structural body 100) included in the power generation unit 40 are located in a substantially cuboid space S (hereinafter referred to as an "accommodating space S") that is a space surrounded by the frames 101. The elements included in the power generation unit 40 are supported by the support structural body 100.

The frames 101 include: two first frames 101a which are located with a predetermined interval in the second direction and each of which is substantially rectangular and annular; and second frames 101b that couple the two annular first frames 101a to each other. In the present embodiment, a length of the first frame 101a in the first direction is longer than a length of the first frame 101a in the upper-lower direction. The length of the first frame 101a in the first direction is longer than a length of the second frame 101b. The frames 101 may include a frame extending in the upper-lower direction or a direction inclined relative to the upper-lower direction.

The interval between the two first frames 101a has a length corresponding to the interval between the pair of guide rails 203. A frame lower portion of the first frame 101a which extends linearly in the first direction is a portion that slides on the guide rail 203 (more specifically, a below-described horizontal portion 203a). When viewed in the second direction, the first frame 101a has a rectangular and annular shape with rounded corners. To be specific, when viewed in the second direction, each of four corners of the first frame 101a has a substantially circular-arc shape. Thus, the power generation unit 40 is easily made to slide on the guide rails 203 in the first direction. Each of only two lower corners among the four corners of the first frame 101a may have such a shape that the power generation unit 40 is easily made to slide on the guide rails 203. Moreover, each corner does not have to have a substantially circular-arc shape when viewed in the second direction, and may have a shape formed by chamfering. Each of the second frames 101b has a rod shape and extends in the second direction.

Moreover, the support structural body 100 includes a bottom plate 102. The bottom plate 102 is located between lower portions of the two first frames 101a and connected to the lower portions of the two first frames 101a. The bottom plate 102 supports the internal combustion engine 41 from below.

More specifically, the internal combustion engine 41 includes an engine main body 55. The engine main body 55 includes a cylinder head, a cylinder block, and a crank case. The cylinder head, the cylinder block, and the crank case are coupled to each other in this order from an upper side in the upper-lower direction. The cylinder head also includes a cylinder head cover. In the present embodiment, a direction in which the crank shaft 54 extends extends in parallel with the longitudinal direction of the support structural body 100. Thus, the multiple cylinder engine in which cylinders are lined up in a row is easily accommodated in the accommodating space S surrounded by the support structural body 100.

Legs 91 (in the present embodiment, four legs 91) are attached to the engine main body 55. The legs 91 extend downward from the engine main body 55 and support the engine main body 55. A rubber mount 92 that is a vibration-proof member is attached to a lower end portion of each leg 91. The rubber mount 92 is fixed to the support structural body 100. More specifically, the rubber mount 92 is fixed to the bottom plate 102. Vibration transmitted from one of the movable body 1 as an installed target and the engine main body 55 to the other is reduced by the rubber mounts 92. In the present embodiment, the internal combustion engine 41 is fixed to the support structural body 100 through the vibration-proof members, i.e., the internal combustion engine 41 is mounted on the support structural body 100 by so-called rubber mounting. The elements included in the power generation unit 40 other than the internal combustion engine 41 are fixed to the support structural body 100 without through the vibration-proof members, i.e., the elements included in the power generation unit 40 other than the internal combustion engine 41 are mounted on the support structural body 100 by so-called rigid mounting. Examples of the elements mounted by the rubber mounting include not only the engine main body 55 but also elements, such as an air cleaner 71, a forced induction device 73, and a muffler 79 described below, connected to the engine main body 55 through pipes. Examples of the elements mounted by the rigid mounting include electrical components, such as the power generator 43, the electric power ECU 47, and the inverter 44.

Various interfaces, such as the fluid interface 42a, the electric interface 45, and the communication interface 46, included in the power generation unit 40 are located in the vicinity of one same side plane among four side planes of the substantially cuboid accommodating space S that is a space surrounded by the frames 101. For example, as shown in FIG. 3, the support structural body 100 includes a side plate 104 which is fixed to the frame 101 in the vicinity of a side plane of the accommodating space S which is located at the near side in the first direction. The side plate 104 integrally supports the electric interface 45 and the communication interface 46. Moreover, as shown in FIG. 6, the fluid interface 42a of the fuel supply pipe 42 is also located in the vicinity of the side plane of the accommodating space S which is located at the near side in the first direction. The fuel supply pipe 42 is not shown in the drawings other than FIG. 6. The fluid interface 42a may be supported by the side plate 104, may be directly supported by the frame 101, or may be supported by a member different from the side plate 104. As above, since the interfaces are collectively located at one side plane of the accommodating space S, connecting work of the interfaces when locating the power generation unit 40 at the movable body 1 and disconnecting work of the interfaces when detaching the power generation unit 40 from the movable body 1 can be smoothly performed by a worker.

As shown in FIG. 6, an extending direction B1 of the crank shaft 54 in the engine main body 55 is parallel to the first direction. Moreover, a camshaft that opens and closes an intake valve and an exhaust valve is located above the crank shaft 54 in the engine main body 55. FIG. 6 shows an extending direction B2 of the camshaft. The camshaft drives by receiving power from the crank shaft 54. Specifically, a power transmission space D is located at one side (in the present embodiment, the near side) in the first direction in the engine main body 55, and a cam chain that connects one end portion of the crank shaft 54 and one end portion of the camshaft is located in the power transmission space D. The driving power of the crank shaft 54 is transmitted to a camshaft 61 through the cam chain.

An end portion 54b of the crank shaft 54 which is opposite to the above end portion connected to the cam chain is coupled to the rotating shaft 43a of the power generator 43. The rotating shaft 43a of the power generator 43 and the crank shaft 54 are coaxially located. The rotating shaft 43a of the power generator 43 and the crank shaft 54 extend in the first direction. The crank shaft 54 and the rotating shaft 43a of the power generator 43 are connected to each other by a universal joint 93. However, the crank shaft 54 and the rotating shaft 43a of the power generator 43 may be directly coupled to each other without the universal joint. In the present embodiment, the two power generators 43 are located on an extended line of the crank shaft 54. The two power generators 43 are coupled to each other in an axial direction. The rotating shafts 43a of the two power generators 43 are coaxially located and are coupled to each other so as to rotate together.

As shown in FIG. 3, the power generation unit 40 includes: an intake pipe 70A through which intake air taken in through an intake opening P1 is introduced to intake ports of the internal combustion engine 41; and an exhaust pipe 70B through which an exhaust gas from exhaust ports of the internal combustion engine 41 is introduced to an exhaust opening P2 and discharged to an outside.

The intake pipe 70A includes the air cleaner 71, the forced induction device 73, and an intake chamber box 75. The air cleaner 71, the forced induction device 73, and the intake chamber box 75 are located in this order from an upstream side to a downstream side in a flow direction of the intake air. The air cleaner 71 includes the intake opening P1. The air cleaner 71 and the forced induction device 73 are connected to each other by an intake pipe portion 72, and the forced induction device 73 and the intake chamber box 75 are connected to each other by an intake pipe portion 74. The air cleaner 71 purifies outside air taken in as the intake air. The forced induction device 73 compresses the intake air having flowed through the air cleaner 71 and sends the air to the intake chamber box 75. The forced induction device 73 is a turbocharger that compresses the air by utilizing the flow of the exhaust gas. The intake chamber box 75 absorbs intake pressure pulsation.

Intake pipe portions 76 corresponding to respective combustion chambers extend from the intake chamber box 75. The intake air is sent from the intake chamber box 75 through the intake pipe portions 76 to the combustion chambers.

The electronic control throttle device 51 is located at the intake pipe portion 74. The throttle device 51 is located on an intake passage of the intake pipe portion 74 and includes a throttle valve that changes its opening degree to adjust the amount of air taken in the internal combustion engine 41. The throttle device 51 may include throttle valves, and the throttle valves may be respectively located at the intake pipe portions 76 corresponding to the combustion chambers.

The exhaust pipe 70B includes the muffler 79. Specifically, exhaust pipe portions 77 which are part of the exhaust pipe 70B extend from the respective exhaust ports. The exhaust pipe portions 77 introduce the exhaust gas to the forced induction device 73. The forced induction device 73 is driven by the exhaust gas introduced by the exhaust pipe portions 77. The exhaust gas having flowed through the forced induction device 73 is introduced to the muffler 79 through an exhaust pipe portion 78. The muffler 79 muffles exhaust sound of the internal combustion engine 41. The exhaust gas having flowed through the muffler 79 is discharged through the exhaust opening P2 to an outside. A catalyst that purifies the exhaust gas may be located at the exhaust pipe 70B.

The air cleaner 71 is located at an opposite side of the muffler 79 across the internal combustion engine 41. As shown in FIG. 5, the air cleaner 71, the engine main body 55, and the muffler 79 do not overlap each other when viewed in a direction perpendicular to the first direction. The air cleaner 71, the engine main body 55, and the muffler 79 are lined up in this order toward the near side in the first direction. To be specific, the air cleaner 71 is located at one side (far side) of the engine main body 55 in the first direction, and the muffler 79 is located at the other side (near side) of the engine main body 55 in the first direction. The intake pipe portion 72 that connects the air cleaner 71 and the forced induction device 73 extends from the forced induction device 73 toward the far side in the first direction. Moreover, the exhaust pipe portion 78 that connects the forced induction device 73 and the muffler 79 extends from the forced induction device 73 toward the near side in the first direction.

The air cleaner 71 and the muffler 79 are located so as to be displaced from each other in the upper-lower direction. A center of the air cleaner 71 is located higher than a center of the muffler 79. A longitudinal direction of the air cleaner 71 extends in the first direction, and a longitudinal direction of the muffler 79 extends in the second direction. The intake opening P1 of the air cleaner 71 and an exhaust gas discharging opening of the muffler 79 are located away from each other in the first direction. The intake opening P1 is located at an opposite side of the exhaust opening P2 across the internal combustion engine 41. The intake opening P1 is open at the far side, and the exhaust opening P2 is open at the near side. The muffler 79 and the internal combustion engine 41 partially overlap each other when viewed in the first direction. In the present embodiment, a direction in which the intake opening P1 faces and a direction in which the exhaust opening P2 faces are opposite to each other. One of the intake opening P1 and the exhaust opening P2 faces one side in the second direction, and the other faces the other side in the second direction. The air cleaner 71 and the internal combustion engine 41 partially overlap each other when viewed in the first direction. The forced induction device 73 is located between the air cleaner 71 and the muffler 79 in the first direction. The forced induction device 73 is located so as to be lined up with the internal combustion engine 41 in the second direction.

Moreover, the two power generators 43 are located at an opposite side of the muffler 79 across the internal combustion engine 41. As shown in FIG. 5, the power generators 43, the engine main body 55, and the muffler 79 do not overlap each other when viewed in a direction perpendicular to the first direction. The power generators 43, the engine main body 55, and the muffler 79 are lined up in this order toward the near side in the first direction. To be specific, the power generators 43 are located at one side (far side) of the engine main body 55 in the first direction, and the muffler 79 is located at the other side (near side) of the engine main body 55 in the first direction. The power generators 43 and the air cleaner 71 are adjacently located. As shown in FIG. 5, the power generators 43 and the air cleaner 71 partially overlap each other when viewed in the upper-lower direction. The air cleaner 71 is located above the power generators 43.

Moreover, the two inverters 44 are located at an opposite side of the muffler 79 across the internal combustion engine 41. The inverters 44, the engine main body 55, and the muffler 79 do not overlap each other when viewed in a direction perpendicular to the first direction. The inverters 44, the engine main body 55, and the muffler 79 are lined up in this order toward the near side in the first direction. The inverters 44 are located at an opposite side of the radiators 82 across the internal combustion engine 41 in the second direction.

The two inverters 44 are located in the vicinity of a side plane of the substantially cuboid accommodating space S that is a space surrounded by the frames 101. The two inverters 44 are located so as to overlap the first frame 101a in a top view and exist between upper and lower portions of the first frame 101a in the upper-lower direction. Since the inverters 44 face outward, the inverters 44 easily contact outside air, and therefore, the temperature increase of the inverters 44 is easily suppressed. Moreover, the inverters 44 are located in the vicinity of the intake opening P1. Specifically, the inverters 44 and the intake opening P1 are located in the vicinity of the same side plane of the accommodating space S (see FIG. 5). Therefore, air around the inverters 44 is easily made to flow, and a heat release effect of the inverters 44 by the contact between the inverters 44 and the air is easily improved.

The two radiators 82 are located in the vicinity of a side plane of the substantially cuboid accommodating space S that is a space surrounded by the frames 101. The two radiators 82 are located so as to overlap the first frame 101a in a top view and exist between upper and lower portions of the first frame 101a in the upper-lower direction.

Each of the radiators 82 has a rectangular shape when viewed in the second direction. The radiator 82 includes: a radiator main body having a rectangular shape; and a cooling fan 82a fixed to the radiator main body. The two radiators 82 are lined up in the first direction, in other words, in an extending direction of the crank shaft 54. The two radiators 82 are located such that rotating shafts of the cooling fans 82a are in parallel with the second direction.

The radiators 82 are located at an opposite side of the exhaust pipe portions 77, connected to the exhaust ports of the internal combustion engine 41, across the internal combustion engine 41 or the intake pipe portions 76 connected to the internal combustion engine 41. Specifically, as shown in FIG. 5, the intake pipe portions 76 are connected to the internal combustion engine 41 at a side where the radiators 82 are located, and the exhaust pipe portions 77 are connected to the internal combustion engine 41 at a side opposite to the side where the radiators 82 are located. To be specific, the internal combustion engine 41 is located such that the intake ports are located closer to the radiators 82 than the exhaust ports. The radiators 82 are fixed to the support structural body 100 such that the exhaust pipe portions 77 are located farther from the radiators 82 than the intake pipe portions 76.

As shown in FIG. 6, in a state where the power generation unit 40 is attached to the movable body 1 that is an attached body, lower ends of the radiators 82 are located lower than an upper end of the internal combustion engine 41. In a state where the power generation unit 40 is attached to the movable body 1 that is the attached body, upper ends of the radiators 82 may be located lower than the upper end of the internal combustion engine 41.

Next, the detachable structure of the power generation unit 40 and the detachable structure of the movable body 1 which are attachable to and detachable from each other will be described. One of the detachable structure of the power generation unit 40 and the detachable structure of the movable body 1 includes an engaged portion, and the other includes: an engaging portion that is engageable with the engaged portion; an operation piece that is displaceable between two positions that are a lock position and an unlock position; and an association portion that makes the engaging portion associate with the displacement operation of the operation piece such that when the operation piece is at the lock position, the engaging portion and the engaged portion are engaged with each other, and when the operation piece is displaced from the lock position to the unlock position, the engaging portion and the engaged portion are disengaged from each other. Since the detachable structures are configured as above, a state where the power generation unit 40 is locked to the movable body 1 and a state where the power generation unit 40 is unlocked from the movable body 1 are switched through the association portion by changing the position of the operation piece operated by the worker.

For example, the detachable structure including the engaging portion may include: the engaging portion that is engageable with the engaged portion; a rotary member that is pivotally supported by the support structural body so as to be rotatable between the lock position and the unlock position; and a biasing member that is connected to the rotary member and, when the rotary member is at the lock position, generates biasing force that holds an engaged state between the engaging portion and the engaged portion, and the detachable structure may be configured such that when the rotary member is rotated from the lock position to the unlock position against the biasing force, the engaged state between the engaging portion and the engaged portion is released.

Hereinafter, a set of the detachable structure of the power generation unit 40 and the detachable structure of the movable body 1 which are attachable to and detachable from each other is called a unit lock mechanism. In the present embodiment, the power generation unit 40 is locked to the movable body 1 by two types of unit lock mechanisms M1 and M2. Hereinafter, for clarity, the unit lock mechanisms M1 and M2 are called a first unit lock mechanism M1 and a second unit lock mechanism M2.

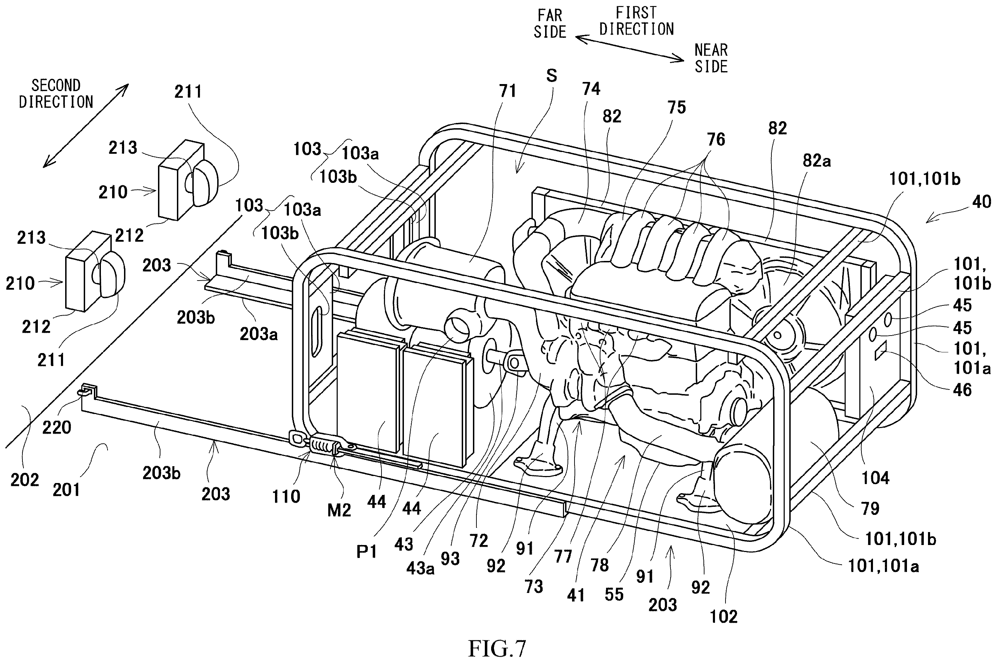

FIG. 7 is a schematic perspective view of the power generation unit 40 that has been unlocked. In the present embodiment, the installation position of the power generation unit 40 is on an installation surface 201 perpendicular to the upper-lower direction in the movable body 1 and is a position facing a wall surface 202 erected from the installation surface 201. The pair of guide rails 203 are fixed onto the installation surface 201. The pair of guide rails 203 guide the power generation unit 40 to the predetermined attachment position that is a position where the power generation unit 40 can be attached to the movable body 1 by the detachable structure of the power generation unit 40. Each drawing shows one pair of guide rails 203 and one power generation unit 40. However, the movable body 1 may include pairs of guide rails 203. For example, the pairs of guide rails 203 may be lined up along the wall surface 202.

The pair of guide rails 203 are located with a predetermined interval. The pair of guide rails 203 extend in a direction perpendicular to the wall surface 202. The pair of guide rails 203 have respective shapes symmetrical to each other. One of the guide rails 203 has a substantially L shape when viewed in its extending direction, and the other has an inverted L shape. Each guide rail 203 includes: a plate-shaped horizontal portion 203a which extends in a direction perpendicular to the wall surface 202 and is perpendicular to the upper-lower direction; and a vertical portion 203b vertically erected from an end edge portion of the horizontal portion 203a, the end edge portion being located far from the other guide rail 203 in the width direction. The power generation unit 40 slides on the horizontal portion 203a. An interval between the vertical portions 203b of the pair of guide rails 203 has a length corresponding to the power generation unit 40. The first unit lock mechanism M1 and the second unit lock mechanism M2 lock the power generation unit 40, which has been placed at the predetermined attachment position on the guide rails 203, to the movable body 1 so as to restrict the movement of the power generation unit 40 relative to the movable body 1.

### First Unit Lock Mechanism

The first unit lock mechanism M1 includes: two engaged portions 103 included in the detachable structure of the power generation unit 40; and two locking devices 210 included in the detachable structure of the movable body 1 that is the attached body. Each of the locking devices 210 includes an engaging portion 211 that is engageable with the engaged portion 103.

The two locking devices 210 are located so as to be spaced apart from each other in a horizontal direction along the wall surface 202 and are fixed to the wall surface 202. The two engaged portions 103 of the power generation unit 40 are located so as to be spaced apart from each other in the second direction (i.e., the transverse direction).

Each of the engaged portions 103 is fixed to one or more frames 101 in the vicinity of a side plane of the accommodating space S which is located at the far side in the first direction. The engaged portion 103 includes: a plate portion 103a perpendicular to the horizontal direction; and an engagement hole 103b that penetrates the plate portion 103a. When the power generation unit 40 is at the attachment position on the guide rails 203, the plate portion 103a faces the wall surface 202 in the first direction. The engagement hole 103b is an elongated hole. As shown in FIG. 4, the engagement holes 103b of the two engaged portion 103 are located at different plate members but may be located at one plate member.

The locking device 210 is of a twist lock type. The locking device 210 includes the engaging portion 211, a base 212, and a shaft 213. For example, the base 212 is fixed onto the wall surface 202 of the movable body 1 that is the attached body. The shaft 213 extends perpendicularly from the wall surface 202. In other words, the shaft 213 extends in the extending direction of the guide rail 203. The shaft 213 is supported by the base 212 so as to be rotatable. The shaft 213 projects from the base 212, and the engaging portion 211 is fixed to an end portion of the shaft 213. The engaging portion 211 rotates integrally with the shaft 213.

The engaging portion 211 has a laterally long shape extending in a direction perpendicular to the extending direction of the shaft 213. When a direction in which the engaging portion 211 extends and a direction in which the engagement hole 103b extends coincide with each other, the engaging portion 211 can pass through the engagement hole 103b. When the direction in which the engaging portion 211 extends and the direction in which the engagement hole 103b extends do not coincide with each other, the engaging portion 211 cannot pass through the engagement hole 103b.

The locking device 210 may be configured such that the shaft 213 is manually rotated or may be configured such that the shaft 213 is automatically rotated. For example, a lever by which the shaft 213 is manually rotated about an axis of the shaft 213 may be located at the base 212. In this case, the lever corresponds to the operation piece, and the shaft 213 corresponds to the association portion. Or, for example, the shaft 213 may be rotatable by an actuator. For example, an actuator that rotates the shaft 213 may be located at the base 212. In this case, for example, the actuator may automatically rotate the shaft 213.

Locking the power generation unit 40 to the movable body 1 by the first unit lock mechanism M1 will be described. In a state where the direction in which the engagement hole 103b extends and the direction in which the engaging portion 211 extends coincide with each other, the power generation unit 40 is made to slide along the guide rails 203 to the attachment position, and the engaging portions 211 are inserted into the engagement holes 103b. Then, the shafts 213 are rotated by 90°, and therefore, the engaging portions 211 cannot come out from the engagement holes 103b. Thus, the movement of the power generation unit 40 relative to the movable body 1 toward the near side in the first direction can be restricted.

Releasing the locking of the power generation unit 40 to the movable body 1 by the first unit lock mechanism M1 can be performed through a procedure opposite to the procedure of the locking described above.

### Second Unit Lock Mechanism

Two engaged portions 220 are located at respective far-side end portions of the pair of guide rails 203. The power generation unit 40 includes two locking devices 110. The locking devices 110 include respective engaging portions 115a that are engageable with the engaged portions 220. The second unit lock mechanism M2 includes: the engaged portions 220 included in the detachable structure of the movable body 1; and the locking devices 110 included in the detachable structure of the power generation unit 40.

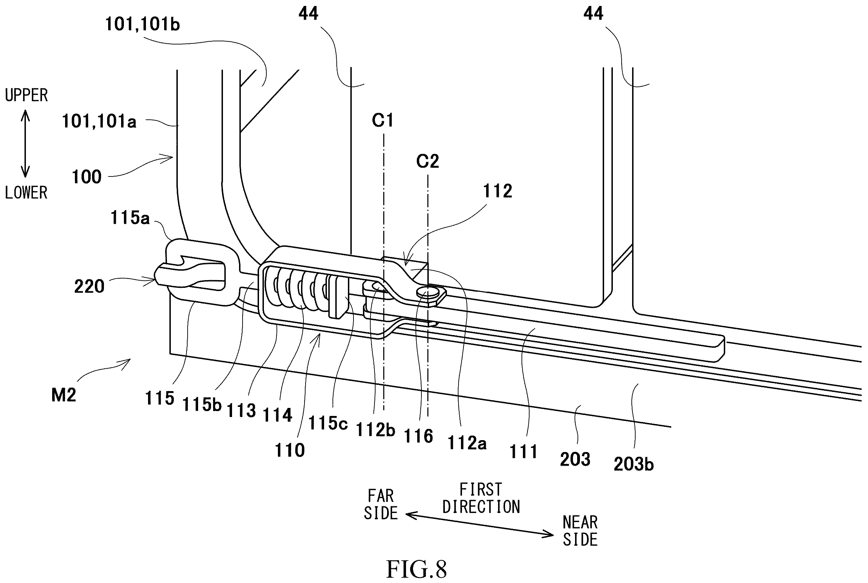

FIG. 8 is a schematic enlarged perspective view of the second unit lock mechanism M2. The engaged portion 220 has a hook shape. The engaged portion 220 having the hook shape is open toward the far side. For example, the engaged portion 220 projects from the vertical portion 203b outward in the second direction.

Each of the two locking devices 110 is located in the vicinity of a far-side end portion of a lower portion of the first frame 101a so as to be attachable to and detachable from the engaged portion 220 in a state where the power generation unit 40 is at the attachment position. The locking device 110 includes a lever 111, a lever supporting portion 112, a holding member 113, a biasing member 114, and an engaging member 115. The lever 111 is one example of the rotary member.

The lever 111 has a rod shape. The lever supporting portion 112 is fixed to the lower portion of the first frame 101a. One end portion of the lever 111 is pivotally supported by the lever supporting portion 112. Specifically, the lever supporting portion 112 includes: a projecting piece 112a projecting from the lower portion of the first frame 101a outward in the second direction; and a coupling body 112b that couples the projecting piece 112a and the lever 111. The coupling body 112b is inserted into a through hole that penetrates the projecting piece 112a in the upper-lower direction and a through hole that penetrates one end portion of the lever 111 in the upper-lower direction. Thus, the lever 111 is rotatable between a predetermined lock position and a predetermined unlock position relative to the lever supporting portion 112 about an axis C1 extending in the upper-lower direction.

In the present embodiment, the lock position of the lever 111 is a position at which the lever 111 extends rearward from the axis C1 such that a direction from the axis C1 toward an axis C2 is parallel to the first direction. In other words, the lock position of the lever 111 is a position at which the axis C2 is located farthest from the engaged portion 220. The unlock position of the lever 111 is a position at which the direction from the axis C1 toward the axis C2 is inclined relative to the first direction.

Moreover, the holding member 113 is coupled to the lever 111 so as to be swingable. Specifically, in addition to the through hole by which the lever 111 is coupled to the lever supporting portion 112, the lever 111 includes another through hole by which the lever 111 is coupled to the holding member 113. The holding member 113 has a substantially U shape, and both end portions of the holding member 113 include two through holes. In a state where both end portions of the holding member 113 sandwich the lever 111 such that the through hole of the lever 111 is lined up with the through holes of the holding member 113 in the upper-lower direction, a coupling body 116 is inserted into the through holes of the holding member 113 and the through hole of the lever 111. Thus, the holding member 113 is swingable relative to the lever 111 about the axis C2 extending in the upper-lower direction.

The holding member 113 holds the biasing member 114. Moreover, the holding member 113 is connected to the engaging member 115 so as to be movable relative to the engaging member 115. To be specific, the holding member 113, the biasing member 114, and the engaging member 115 are connected so as to be integrally swingable relative to the lever 111 about the axis C2.

The engaging member 115 includes the annular engaging portion 115a, a rod portion 115b penetrating a middle portion of the holding member 113, and a stopper 115c. The stopper 115c is located in a space surrounded by the holding member 113, i.e., the stopper 115c is located between the middle portion of the holding member 113 and both end portions of the holding member 113. One end portion of the rod portion 115b is connected to the annular engaging portion 115a, and the other end portion of the rod portion 115b is connected to the stopper 115c.

The biasing member 114 is a compression coil spring. The biasing member 114 is located in the space surrounded by the holding member 113. The rod portion 115b inserted into the through hole of the middle portion of the holding member 113 is inserted into a radially inner side of the biasing member 114. Therefore, both end portions of the biasing member 114 respectively contact the stopper 115c and the middle portion of the holding member 113. Thus, the biasing member 114 is held between the stopper 115c and the middle portion of the holding member 113. The lever 111 corresponds to the above-described operation piece, and various elements (the rod portion 115b, the holding member 113, and the like) that connect the lever 111 and the engaging portion 115a correspond to the above-described association portion.

Locking the power generation unit 40 to the movable body 1 by the second unit lock mechanism M2 will be described. The power generation unit 40 is made to slide along the guide rails 203 toward the attachment position. When the power generation unit 40 is at the attachment position, the engaged portion 220 and the engaging portion 115a are engaged with each other in a state where the lever 111 is located at the unlock position by being rotated. To be specific, the annular engaging portion 115a is hooked to the hook-shaped engaged portion 220. Then, the lever 111 is made to swing from the unlock position to the lock position against the biasing force of the biasing member 114. Thus, the power generation unit 40 is locked to the movable body 1. More specifically, by the biasing force of the biasing member 114, the engaged state between the engaging portion 115a and the engaged portion 220 is held, and the movement of the power generation unit 40 relative to the movable body 1 toward the near side in the first direction can be restricted.

The movement of the power generation unit 40 toward the far side is also restricted at the attachment position since there is the wall surface 202. In the present embodiment, since the support structural body 100 contacts the bases 212 fixed to the wall surface 202, the movement of the power generation unit 40 toward the far side is restricted. Therefore, when making the lever 111 swing from the unlock position to the lock position, the power generation unit 40 does not move toward the far side by the biasing force of the biasing member 114.

When releasing the locking of the power generation unit 40 to the movable body 1 by the unit lock mechanism M2, the lever 111 is rotated from the lock position to the unlock position against the biasing force. Therefore, the axis C2 approaches the engaged portion 220, and the biasing force of the biasing member 114 disappears. Thus, the biasing member 114 becomes a free state. Then, when the annular engaging portion 115a is detached from the hook-shaped engaged portion 220, the restriction of the movement of the power generation unit 40 relative to the movable body 1 by the unit lock mechanism M2 is released.

### Operational Advantages

As described above, according to the present embodiment, the support structural body 100 of the power generation unit 40 includes the detachable structure that is attachable to and detachable from the movable body 1 that is the attached body. Therefore, the power generation unit 40 can be detached from the movable body 1 and subjected to maintenance. Moreover, the maintenance work of the power generation unit 40 that is being attached to the movable body 1 that is the attached body can be omitted. Therefore, the maintenance work of the power generation unit 40 is easier than that of the internal combustion engine and the power generator since the internal combustion engine and the power generator need to be subjected to the maintenance work in a state where the internal combustion engine and the power generator are being attached to the attached body.

The power generation unit 40 is replaceable with another power generation unit 40 having the same structure. Therefore, when there is the power generation unit 40 that needs to be subjected to maintenance among one or more power generation units 40 mounted on the movable body 1, the power generation unit 40 that needs to be subjected to maintenance is replaced with the power generation unit 40 that has already been subjected to maintenance. Thus, activity performed by a system including the internal combustion engine 41 can be prevented from being stopped.

Moreover, according to the present embodiment, the power generation unit 40 includes the fuel receiving port 42a through which the fuel is introduced to the internal combustion engine 41 from an outside. Since the internal combustion engine 41 receives the fuel from an outside of the power generation unit 40, the power generation unit 40 does not have to include a fuel tank.

Moreover, according to the present embodiment, since a signal can be input to electric equipment of the power generation unit 40 through the communication interface 46 from an outside, the power generation unit 40 itself does not have to include a device that supplies the signal to the electric equipment.

Moreover, according to the present embodiment, the radiators 82 are located at an opposite side of the exhaust pipe portions 77, connected to the exhaust ports of the internal combustion engine 41, across the internal combustion engine 41. Therefore, the radiators 82 can be located away from the exhaust pipe portions 77, and therefore, the heat transfer from the exhaust pipe portions 77 to the radiators 82 can be suppressed.

Moreover, according to the present embodiment, in a state where the power generation unit 40 is attached to the movable body 1, a lower end of the radiator 82 is located lower than the upper end of the internal combustion engine 41. Therefore, heat transferred upward from the internal combustion engine 41 can be prevented from being transferred toward the radiator 82.

Moreover, according to the present embodiment, since the air cleaner 71 is located at an opposite side of the muffler 79 across the internal combustion engine 41, the exhaust gas from the muffler 79 can be prevented from flowing into the air cleaner 71.

Moreover, according to the present embodiment, since the power generators 43 are located at an opposite side of the muffler 79 across the internal combustion engine 41, the heat of the exhaust gas flowing through the muffler 79 can be prevented from being transferred to the power generator 43.

Moreover, according to the present embodiment, since the inverters 44 are located at an opposite side of the muffler 79 across the internal combustion engine 41, the heat of the exhaust gas flowing through the muffler 79 can be prevented from being transferred to the inverters 44.

Moreover, according to the present embodiment, since the locking device 110 can engage the engaging portion 115a of the power generation unit 40 with the engaged portion 220 of the movable body 1 and disengage the engaging portion 115a of the power generation unit 40 from the engaged portion 220 of the movable body 1 by the rotation operation of the lever 111, the configuration for attaching and detaching the power generation unit 40 to and from the movable body 1 can be simplified.

Moreover, according to the present embodiment, since the movable body 1 includes the guide rails 203, the power generation unit 40 can be guided to the predetermined attachment position while being made to slide on the guide rails 203. Therefore, the power generation unit 40 is easily positioned at the predetermined attachment position.

Moreover, according to the present embodiment, since the inverters 44 and the radiators 82 are located in the vicinities of the side planes of the substantially cuboid accommodating space S that is a space surrounded by the frames 101, the heat of the internal combustion engine 41 can be prevented from being transferred to the inverters 44 and the radiators 82.

Moreover, according to the present embodiment, since the inverters 44 and the radiators 82 are located in the vicinities of the side planes of the substantially cuboid accommodating space S that is a space surrounded by the frames 101, the heat of the internal combustion engine 41 can be prevented from being transferred to the inverters 44 and the radiators 82.

Moreover, according to the present embodiment, in a top view, the power generators 43 and the air cleaner 71 are located so as not to overlap the engine main body 55. Therefore, as compared to when the power generator 43 or the air cleaner 71 is located right above the engine main body 55, the heat of the internal combustion engine 41 can be prevented from being transferred to the inverters 44 and the radiators 82.

Moreover, according to the present embodiment, in a top view, the engine main body 55 is located so as not to overlap the exhaust pipe portion 78 and the muffler 79. Therefore, as compared to when the engine main body 55 is located right above the exhaust pipe portion 78 or the muffler 79, the heat of the exhaust pipe portion 78 and the muffler 79 can be prevented from being transferred to the engine main body 55.

### Embodiment 2

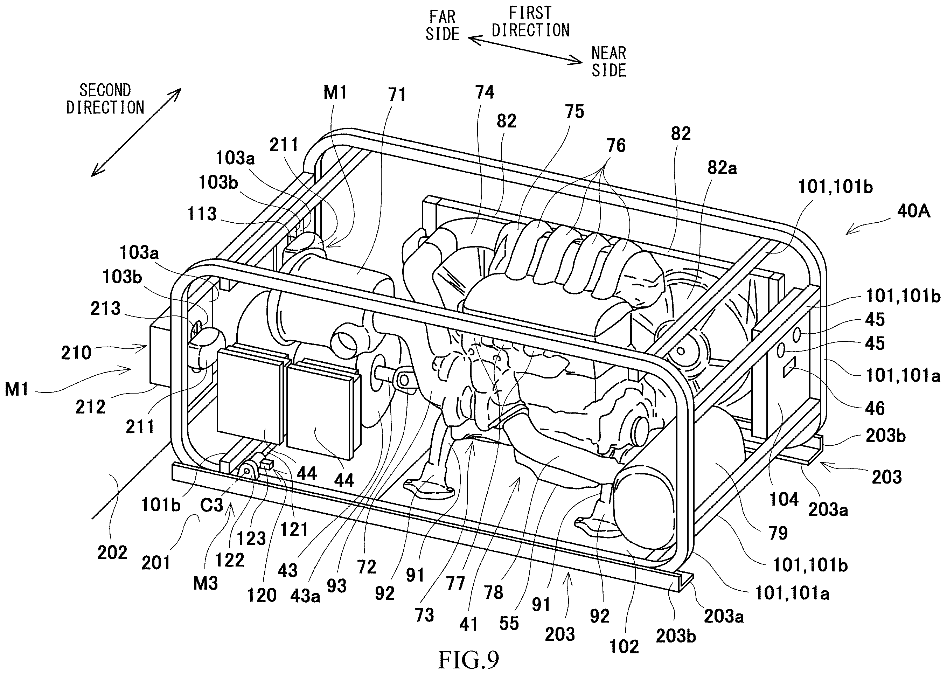

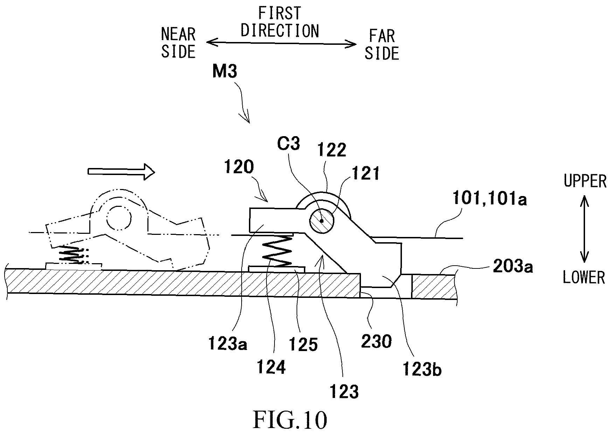

Next, a power generation unit 40A according to Embodiment 2 will be described. FIGS. 9 and 10 are diagrams for explaining the power generation unit 40A according to Embodiment 2. FIG. 9 is a schematic perspective view of the power generation unit 40A that has been fixed to the movable body 1 by a unit lock mechanism M3 according to Embodiment 2. FIG. 10 is a schematic enlarged side sectional view for explaining the unit lock mechanism M3. In Embodiment 2, the movement of the power generation unit 40A relative to the movable body 1 can be restricted by the unit lock mechanism M3 that is different in configuration from the unit lock mechanism M2 described in Embodiment 1.

Various elements in each of the present embodiment and Embodiments 3 and 4 described below are the same as those in Embodiment 1 except for the configuration of the detachable structure of the power generation unit 40 and the configuration of the detachable structure of the attached body which is attachable to and detachable from the detachable structure of the power generation unit 40. Therefore, in the description of the present embodiment and Embodiments 3 and 4, the elements related to the detachable structures will be mainly described, and the repetition of the same explanation as Embodiment 1 is avoided.

The two engaged portions 220 are located at the respective far-side end portions of the pair of guide rails 203. The power generation unit 40A includes a locking device 120. The locking device 120 includes engaging portions 123b that are engageable with two engaged portions 230. The unit lock mechanism M3 includes: the two engaged portions 230 included in the detachable structure of the movable body 1; and the locking device 120 included in the detachable structure of the power generation unit 40A. In FIG. 10, the power generation unit 40A which is being made to slide along the guide rails 203 toward the attachment position is shown by two-dot chain lines, and the power generation unit 40A including the engaging portion 123b that has been engaged with the engaged portion 230 at the attachment position is shown by solid lines.

As shown in FIG. 10, the engaged portion 230 is an engagement hole located at the horizontal portion 203a of each guide rail 203. The engaged portion 230 is located at the far-side end portion of each guide rail 203.

The locking device 120 includes a shaft 121, two rotary support portions 122, two rotary members 123, two biasing members 124, and receiving members 125.

The shaft 121 extends between the pair of first frames 101a in the second direction. The two rotary support portions 122 are respectively fixed to the lower portions of the pair of first frames 101a. The two rotary support portions 122 supports both end portions of the shaft 121 such that the shaft 121 is rotatable about a center line C3.

The two rotary members 123 are fixed to the vicinities of both end portions of the shaft 121. More specifically, the rotary members 123 are fixed to portions of the shaft 121 which are located inside the rotary support portions 122 in the second direction. When the power generation unit 40 is located on the guide rails 203, the rotary members 123 overlap the respective horizontal portions 203a of the guide rails 203 in a top view. In the present embodiment, the pair of rotary members 123 are fixed to the shaft 121. Therefore, when one of the pair of rotary members 123 rotates about the center line C3 of the shaft 121, the other rotary member 123 rotates together.

The rotary member 123 includes a rotation operation portion 123a and the engaging portion 123b. The rotation operation portion 123a extends rearward from the center line C3. The biasing member 124 is located under the rotation operation portion 123a so as to be able to bias the rotation operation portion 123a in the upper-lower direction. The biasing member 114 is a compression coil spring. The receiving member 125 is a plate body that is located above the biasing member 124 and slides on the horizontal portion 203a of the guide rail 203. The biasing member 124 is sandwiched between the rotation operation portion 123a and the receiving member 125 in the upper-lower direction. One end portion of the biasing member 124 is connected to the rotation operation portion 123a, and the other end portion of the biasing member 124 is connected to the receiving member 125.

The engaging portion 123b extends in a diagonally forward direction from the center line C3. To be specific, the engaging portion 123b is located at an opposite side of the rotation operation portion 123a across the center line C3 so as to move upward about the center line C3 when the rotation operation portion 123a is pushed down. A length of the engaging portion 123b is longer than a length from the center line C3 of the power generation unit 40 to a lower surface of the first frame 101a. To be specific, when the power generation unit 40 is located on the guide rails 203, tip portions of the engaging portions 123b contact the respective horizontal portions 203a of the guide rails 203. The rotation operation portion 123a corresponds to the above-described operation piece, and a portion of the rotary member 123 which connects the rotation operation portion 123a and the engaging portion 123b corresponds to the above-described association portion.

Locking the power generation unit 40A to the movable body 1 by the unit lock mechanism M3 will be described. As shown by the two-dot chain lines in FIG. 10, when the power generation unit 40A is being made to slide along the guide rails 203 toward the attachment position, the engaging portions 123b and the receiving members 125 slide on the respective horizontal portions 203a of the guide rails 203. The biasing members 124 generate the biasing force in such a direction as to push the rotation operation portions 123a upward. Therefore, the tip portions of the engaging portions 123b slide on the respective horizontal portions 203a of the guide rails 203 while pushing the horizontal portions 203a of the guide rails 203 downward by the biasing force of the biasing members 124.

When the power generation unit 40A reaches the attachment position, in other words, when the tip portions of the engaging portions 123b reach the engagement holes that are the engaged portions 230, the engaging portions 123b enter into the engagement holes that are the engaged portions 230 by the biasing force of the biasing members 124. A rotational position of the rotation operation portion 123a about the center line C3 at this time may be called a lock position. A rotational position of the rotation operation portion 123a about the center line C3 when the rotation operation portion 123a is outside the engagement hole that is the engaged portion 230 may be called an unlock position. The engaging portion 123b has such a shape as to be hooked to the engagement hole that is the engaged portion 230. Therefore, the engaged state between the engaging portion 123b and the engaged portion 230 is held by the biasing force of the biasing member 124, and therefore, the movement of the power generation unit 40A relative to the movable body 1 toward the near side in the first direction can be restricted.

When releasing the locking of the power generation unit 40A to the movable body 1 by the unit lock mechanism M3, the rotation operation portions 123a are pushed down from the lock position to the unlock position against the biasing force. To be specific, the engaging portions 123b get out of the engagement holes that are the engaged portions 230, and the restriction of the movement of the power generation unit 40A relative to the movable body 1 is released.

The present embodiment obtains the same effects as Embodiment 1.

### Embodiment 3

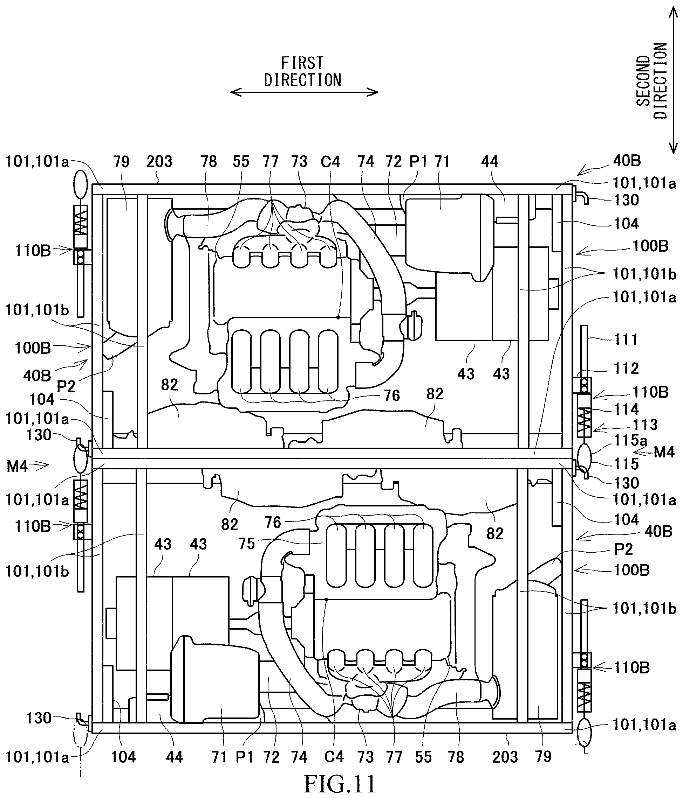

Next, a power generation unit 40B according to Embodiment 3 will be described. FIG. 11 is a diagram for explaining the power generation unit 40B according to Embodiment 3. The power generation unit 40B according to Embodiment 3 can be coupled to another power generation unit 40B in the horizontal direction. FIG. 11 shows two power generation units 40B. The two power generation units 40B are lined up in the second direction and are in a coupled state by a unit lock mechanism M4. In the present embodiment and Embodiment 4 described below, the detachable structure of the power generation unit is used to be coupled to another power generation unit. To be specific, in the present embodiment and Embodiment 4 described below, the attached body that is a target to which the power generation unit 40B is attached is not the movable body but another power generation unit 40B. As described below, the power generation unit 40B includes the engaging portion 115a and an engaged portion 130.

The power generation unit 40B includes a support structural body 100B. Various elements (except for the support structural body 100B) included in the power generation unit 40B are supported by the support structural body 100B. As with Embodiment 1, the support structural body 100B includes the frames 101. The frames 101 includes: two substantially rectangular first frames 101a located with a predetermined interval in the second direction; and second frames 101b coupling the two substantially rectangular first frames 101a.

Moreover, the support structural body 100B includes two locking devices 110B and two engaged portions 130. The locking device 110B is the same in configuration as the locking device 110 of Embodiment 1. To be specific, the locking device 110B includes the lever 111, the lever supporting portion 112, the holding member 113, the biasing member 114, and the engaging member 115. Explanations of these elements are omitted. The engaged portion 130 has a hook shape that is open inward in the second direction.

The locking device 110B of the present embodiment and the locking device 110 of Embodiment 1 are different from each other in that: the engaging portion 115a of the locking device 110 of Embodiment 1 is engaged with the engaged portion 220 fixed to the guide rail 203 of the movable body 1; and the engaging portion 115a of the locking device 110B of the present embodiment is engaged with the engaged portion 130 of the support structural body 100B of another power generation unit 40.

In a top view, the two engaging portions 115a of the two locking devices 110B and the two engaged portions 130 in the power generation unit 40B are respectively located at four corners of the power generation unit 40. The lever supporting portions 112 of the two locking devices 110B are respectively fixed to the second frame 101b located at one side in the first direction among the frames 101 and the second frame 101b located at the other side in the first direction among the frames 101.

One of the two locking devices 110B of the power generation unit 40B is located so as to be engaged with the engaged portion 130 of another power generation unit 40B adjacently located at one side of the power generation unit 40B in the second direction, and the other of the two locking devices 110B of the power generation unit 40B is located so as to be engaged with the engaged portion 130 of yet another power generation unit 40B located at the other side of the power generation unit 40B in the second direction. One of the two engaged portions 130 of the power generation unit 40B is located so as to be engaged with the engaging portion 115a of another power generation unit 40B adjacently located at the right side of the power generation unit 40B, and the other of the two engaged portions 130 of the power generation unit 40B is located so as to be engaged with the engaging portion 115a of yet another power generation unit 40B adjacent to the power generation unit 40B in the second direction.

In a top view, the two locking devices 110B are located point-symmetrically with respect to a center line C4 that passes through a middle of the power generation unit 40B and extends in the upper-lower direction. In a top view, the two engaged portions 130 are also located point-symmetrically with respect to the center line C4. Specifically, in a top view, the two locking devices 110B are respectively located at a front-right corner and rear-left corner of the power generation unit 40B, and the two engaged portions 130 are respectively located at a front-left corner and rear-right corner of the power generation unit 40B. Therefore, the power generation unit 40B can be rotated about the center line C4 by 180° and coupled to another power generation unit 40. To be specific, as shown in FIG. 11, the two power generation units 40B can be coupled to each other such that the radiators 82 face each other. Since the two power generation units 40B are coupled to each other such that the radiators 82 face each other, the radiators 82 of one of the two power generation units 40B can be located away from the exhaust pipe portion 77 of the other power generation unit 40B, and therefore, the deterioration of the cooling efficiency of the radiators 82 can be suppressed.

In the present embodiment, since the power generation units 40B can be coupled to each other in the horizontal direction, the power generation units 40B can be integrated with each other, and therefore, the arrangement of the power generation units 40B is easily aligned.

### Embodiment 4

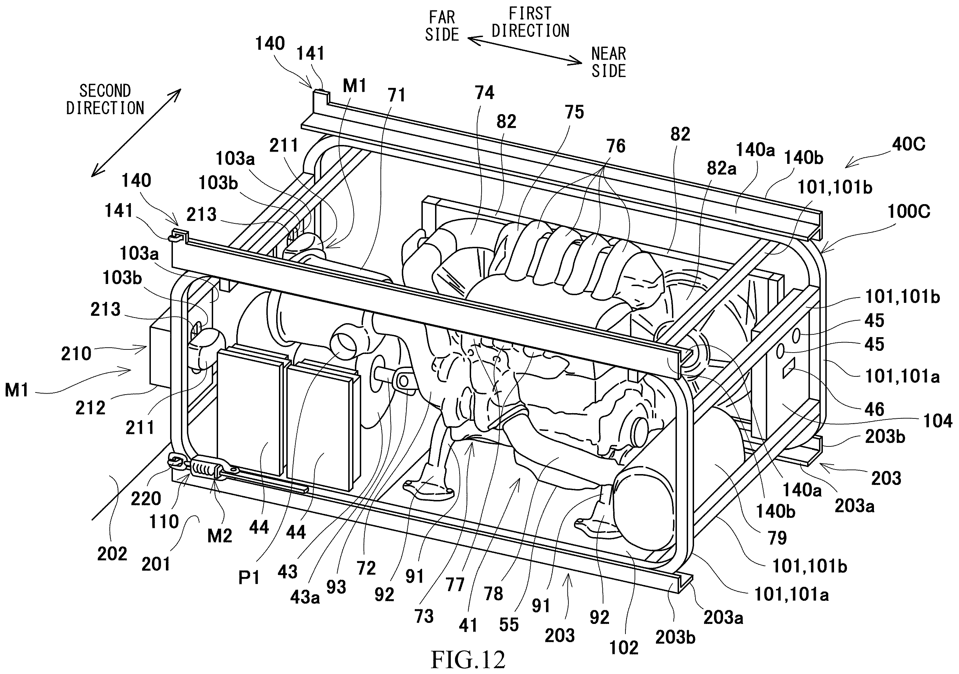

Next, a power generation unit 40C according to Embodiment 4 will be described. FIG. 12 is a diagram for explaining the power generation unit 40C according to Embodiment 4. The power generation unit 40C according to Embodiment 4 is configured such that another power generation unit 40C can be stacked on an upper side thereof.

The power generation unit 40C includes a support structural body 100C. Various elements (the support structural body 100C) included in the power generation unit 40C are supported by the support structural body 100C. As with Embodiment 1, the support structural body 100C includes the frames 101. The frames 101 include: two substantially rectangular first frames 101a located with a predetermined interval in the second direction; and second frames 101b coupling the two substantially rectangular first frames 101a.

Moreover, the support structural body 100C of the power generation unit 40C includes a pair of guide rails 140. The pair of guide rails 140 of the power generation unit 40C allow another power generation unit 40C to be mounted on the power generation unit 40C and guide the another power generation unit 40C to the predetermined attachment position. The pair of guide rails 140 are. The pair of guide rails 140 are fixed to respective upper portions of the pair of first frames 101a. The pair of guide rails 140 extend in the first direction, i.e., the longitudinal direction. Each guide rail 140 includes: a plate-shaped horizontal portion 140a extending in the first direction and perpendicular to the upper-lower direction; and a vertical portion 140b vertically erected from one width-direction end portion of the horizontal portion 140a.

As with Embodiment 1, the power generation unit 40C includes the locking devices 110. Moreover, engaged portions 141 are located at respective far-side end portions of the pair of guide rails 140 of the power generation unit 40C. The engaged portion 141 is engageable with the engaging portion 115a of the locking device 110. To be specific, the engaged portion 141 is the same as the engaged portion 220 of the guide rail 203 of the movable body 1. To be specific, the engaged portion 141 has a hook shape. The engaged portion 141 having the hook shape is open toward the far side. For example, the engaged portion 141 projects from the vertical portion 140b outward in the second direction. Therefore, the pair of guide rails 140 of the power generation unit 40 function to guide another power generation unit 40, mounted on an upper side thereof, to the attachment position.

In the present embodiment, since the power generation units 40C can be stacked on each other in the upper-lower direction, a space above the power generation unit 40 can be effectively utilized. Moreover, since the power generation units 40C can be coupled to each other in the upper-lower direction, the power generation units 40C can be integrated with each other, and therefore, the arrangement of the power generation units 40C is easily aligned.

### Other Embodiments

The foregoing has described the embodiments. Modifications, deletions, and additions may be made with respect to the above configuration within the scope of the present disclosure.

For example, in the above embodiment, the railcar was described as the movable body, but the movable body is not limited to this. For example, the movable body may be another type of land movable body including a driving wheel. For example, instead of a tracked vehicle, the land movable body may be a vehicle including four or more wheels, such as an LTV, a truck, or a bus, or may be a utility vehicle, a motorcycle, a PTV, or the like. Moreover, the movable body may be a water movable body or underwater movable body including a propulsion device or may be, for example, an air movable body that flies in the air. Examples of the water movable body include a ship, a tanker, and a personal watercraft. One example of the underwater movable body is a submersible. Examples of the air movable body include an aircraft, a helicopter, and a drone. A rotor may be a propeller.

The installed target on which the power generation unit is mounted does not have to be the movable body. For example, the installed target on which the power generation unit is mounted may be a building or facility which requires electric power. To be specific, the attached body that is a target to which the power generation unit is attached by the detachable structure of the power generation unit may be a movable body, a fixed body, or another power generation unit as in Embodiments 3 and 4. The attached body may be a fuel supply unit.

The installation position of the power generation unit does not have to be a position that faces the wall surface 202 erected from the installation surface 201. When the power generation unit is configured to be locked by the locking devices 210 of the attached body, the locking device 210 may be fixed to a structural body located at the installation surface 201 instead of the wall surface 202. The guide rails do not have to be located at the installation position of the power generation unit. The detachable structure of the attached body which is attachable to and detachable from the detachable structure of the power generation unit may be located at the installation position.

The configuration of the fuel supply unit is not limited to that described in the above embodiment. For example, the fuel supply unit may not include some or all of the elements described in the above embodiment. For example, the number of fuel tanks included in the fuel supply unit does not have to be two and may be one or may be three or more. Moreover, the installed target, such as the movable body, on which the power generation unit is mounted may not include the fuel supply unit.

Moreover, it is preferable that the support structural body of the fuel supply unit adopt the same detachable structure as the power generation unit. In this case, in order to prevent one of the fuel supply unit and the power generation unit from being attached to a portion to which the other should be attached, the detachable structure included in the support structural body of the fuel supply unit and the detachable structure included in the support structural body of the power generation unit may be different in type from each other. The support structural body of the fuel supply unit and the support structural body of the power generation unit may be different in dimension from each other. A pair of guide rails for the fuel supply unit and a pair of guide rails for the power generation unit may be different in rail width (i.e., an interval between the pair of guide rails) from each other.

The power generation unit does not have to include some of the elements described in the above embodiment. For example, in the above embodiment, the power generation unit includes the fuel receiving port through which the fuel is introduced to the internal combustion engine from an outside. However, instead of the fuel receiving port, the power generation unit may include a fuel tank that stores the fuel for the internal combustion engine. The power generation unit and the fuel supply unit may be configured as a single unit. The power generation unit does not have to include the air cleaner, and the air cleaner may be located outside the power generation unit.

Moreover, instead of the intake opening P1 through which the intake air is taken in, the power generation unit may include a duct interface connected to an intake duct located outside the power generation unit. Air taken in through an intake opening of the intake duct may be introduced to the internal combustion engine through the duct interface. Thus, the intake air can be taken in through an air intake opening located away from the power generation unit, and therefore, the temperature of the intake air is easily lowered.

The power generation unit may include elements instead of the elements disclosed in the above embodiment. For example, the forced induction device included in the power generation unit does not have to be the turbocharger and may be a different type of forced induction device. For example, the forced induction device may be a supercharger that is rotated by a crank shaft or the like. The internal combustion engine may adopt an existing structure. For example, the internal combustion engine does not have to be a multiple cylinder engine and may be a single cylinder engine. Moreover, for example, the internal combustion engine may be a four-stroke engine or a two-stroke engine. The power generation unit does not have to include the forced induction device. The internal combustion engine may use fuel other than a hydrogen gas. To be specific, the fuel may drive the internal combustion engine and may be gasoline, light oil, liquefied natural gas, methanol, biofuel, or the like.

In the above embodiments, two power generators are connected in series. However, the above embodiment is not limited to this. The number of power generators included in the power generation unit is not limited to two. Instead of the two power generators, the internal combustion engine may drive one power generator or may drive three or more power generators. Moreover, when the power generation unit includes power generators, a common inverter may be connected to the power generators.

In the above embodiments, the power generation units are supplied with the fuel from one common fuel supply unit. However, fuel supply units may be located for respective power generation units. A common electric interface may be located for inverters included in the power generation unit. The number of radiators included in the power generation unit does not have to be two and may be one or may be three or more. Moreover, the power generation unit may include a radiator for the internal combustion engine and a radiator for the power generator and the inverter.

Moreover, in the above embodiment, the crank shaft and the rotating shaft of the power generator are located coaxially. However, the rotating shaft of the power generator may be non-coaxial with the axis of the crank shaft, i.e., may be displaced from the axis of the crank shaft. In this case, the rotating shaft of the power generator is indirectly connected to the crank shaft through a power transmitting member, such as a gear or a chain. The power generator does not have to generate electric power by using a three-phase AC motor, and an existing power generator may be used. For example, the power generator may be a DC power generator.

The power generation unit may include elements other than the elements described in the above embodiment. For example, the power generation unit may include a power storage. Moreover, the power generation unit may include elements, such as a lubricating oil passage and an oil pump located on the lubricating oil passage, by which oil pumped up by an oil pump from an oil pan of the internal combustion engine is introduced as lubricating oil to respective portions, such as a gear of the internal combustion engine.

The power generation unit may include electric equipment other than the electric equipment, such as the power generator, the inverter, and the electric controller, described in the above embodiment. Moreover, the power generation unit may include at least one sensor that detects a state of the power generation unit. The state of the power generation unit may include a state of the internal combustion engine, a state of the power generator, and the like. For example, the at least one sensor may include: a temperature sensor that detects an oil temperature; a temperature sensor that detects the temperature of the cooling water; a temperature sensor that detects the temperature of the power generator; a temperature sensor that detects the temperature of the inverter; a current sensor included in the inverter; a rotational frequency sensor that detects a rotational frequency (rotational speed) of the internal combustion engine; a throttle opening degree sensor; a strain gauge that detects mechanical loads of machine parts and structural bodies included in the power generation unit; a flow rate sensor that detects the flow rate of the fuel flowing through the fuel supply pipe; and the like.

The arrangement of the elements included in the power generation unit is not limited to that described in the above embodiment. It is preferable that the elements included in the power generation unit be located such that the heat of the internal combustion engine of the power generation unit and the heat of the internal combustion engine of another power generation unit are hardly transferred to each other.

Moreover, in addition to the electric interface 45 as an interface through which electric power generated by the power generation unit is supplied to an outside, the power generation unit may include an electricity input connector through which electricity is input from an outside to the electric equipment of the power generation unit. In this case, the electricity input connector may be supported by the support structural body.

Moreover, the shape and structure of the support structural body are not limited to those described in the above embodiment. For example, the frames 101 of the support structural body may be combined with each other to have an elongated shape in the upper-lower direction as a whole.

In the above embodiment, the support structural body 100 includes the bottom plate 102 that supports the internal combustion engine 41 from below. However, the bottom plate 102 may support not only the internal combustion engine 41 but also other elements, such as the power generator 43, from below.

The support structural body does not have to include the bottom plate 102. In this case, the frames 101b may support the internal combustion engine 41 from below. The rubber mount 92 may be located between the frame 101b and the internal combustion engine 41. The support structural body may include a side plate that covers, from a lateral side, the elements of the power generation unit supported by the support structural body.

Moreover, for example, the support structural body may include wheels for movement, each of the wheels being roatably supported by a frame, a bottom plate, or the like.

The support structural body may support an electricity output connector which is connected to an electric power consumption target located at the installed target and through which output electric power is supplied to the electric power consumption target. Since the electricity output connector is supported by the support structural body including the detachable structure, the work of attaching and detaching the installed target and the power generation unit to and from each other is easily facilitated. It is preferable that the electricity output connector be located at a position away from heat sources, such as the internal combustion engine. It is preferable that the electricity output connector be located adjacent to the detachable structure or the fuel receiving port. Thus, the movement distance of the worker during the attaching and detaching work can be reduced.

The configurations described in Embodiments 1 to 4 can be suitably combined with each other. For example, the power generation unit may include only one of the detachable structures described in the above embodiments or may include the detachable structures arbitrarily selected. For example, Embodiment 1 has described the configuration in which the power generation unit 40 is locked to the movable body 1 by two types of unit lock mechanisms M1 and M2. However, the configuration of locking the power generation unit 40 to the movable body 1 may be only one of the two types of unit lock mechanisms M1 and M2. To be specific, the detachable structure included in the power generation unit 40 may be only one of the engaged portion 103 and the locking device 110.

Moreover, the detachable structure included in the support structural body described in the above embodiment is merely an example. For example, instead of the engaged portion 103 described Embodiment 1, the power generation unit may include the locking device 210. In this case, the attached body may include the engaged portion 103. Instead of the locking device 110 described in Embodiment 1, the power generation unit may include the engaged portion 220. In this case, the attached body may include the locking device 110. The same is true in Embodiment 3.

In Embodiment 3, the detachable structures included in the support structural body 100B of the power generation unit 40B are located point-symmetrically in a top view. However, each of Embodiments 1, 2, and 4 may also be configured such that the direction of the power generation unit is changed, and then, the power generation unit can be locked at the attachment position. For example, the support structural body may include a pair of detachable structures that are located point-symmetrically in a top view. Moreover, for example, the support structural body may include a pair of detachable structures that are located line-symmetrically in a top view. For example, the power generation unit 40 of Embodiment 1 includes the engaged portions 103 in the vicinity of a side plane of the accommodating space S which is located at the far side in the first direction, and in addition, may include the additional engaged portions 103 at its opposite side, i.e., in the vicinity of a side plane of the accommodating space S which is located at the near side in the first direction. Therefore, when locating the power generation units side by side in the second direction, the two adjacent power generation units can be located such that the radiators face each other. Thus, the radiator of one of the two adjacent power generation units can be located away from the exhaust pipe of the other power generation unit, and therefore, the deterioration of the cooling efficiency of the radiators can be suppressed.

It is preferable that the support structural body have such a structure that when locating the power generation units at the installed target, the installation directions of the power generation units are not mistaken.

Moreover, the number of detachable structures included in the power generation unit, the position of the detachable structure in the power generation unit, the configuration of the detachable structure, and the like are not limited to those described in the above embodiment.

For example, in Embodiment 1, the engaged portion 220 does not have to be located at the far-side end portion of the guide rail 203. For example, the engaged portion 220 may be located in the vicinity of a middle of the guide rail 203 in the first direction. For example, in Embodiment 2, the shaft 121 does not have to extend between the pair of first frames 101a in the second direction. The two rotary support portions 122 supporting both end portions of the shaft 121 may be fixed to one first frame 101a. The shaft 121 does not have to extend in the second direction and may extend in the first direction.

In each detachable structure, the engaging portion and the engaged portion may have such shapes as to be engageable with each other. For example, the engaging portion 115a may have a hook shape, and the engaged portion 220 may have an annular shape. Each of the engaging portion 115a and the engaged portion 220 may have a hook shape.

The elements (except for the support structural body) included in the power generation unit are located in the substantially cuboid accommodating space S that is a space surrounded by the frames. Therefore, even when the power generation unit falls or contacts an obstacle, the elements are protected by the frames of the support structural body, and therefore, the elements are easily prevented from being damaged. The engine main body, the power generator, the air cleaner, the muffler, and the like are located inside the frames. The accommodating space S is not sealed, in other words, gaps between at least some of the frames of the support structural body are not closed. Therefore, the heat generated in the accommodating space S is easily released, and the temperature increase of the power generation unit is easily prevented.

The support structural body is not limited to the configuration described in the above embodiment and may adopt a wide variety of structures. Gaps between some of the frames of the support structural body may be covered with panels. The support structural body may include a reinforcing member that prevents the frame from being deformed. The power generation unit may include a vibration-proof structure that prevents vibration of the internal combustion engine from being transmitted to the electrical components in the power generation unit. The support structural body may include wheels to move along the guide rails. The support structural body may include a hook by which the support structural body is suspended. By this hook, work of conveying the support structural body between a fixed position where the support structural body is fixed to the vehicle body and a separate position where the support structural body is separated from the vehicle body is easily facilitated.

In the above embodiments, the interfaces are collectively located at a side plane of the accommodating space S which is located at the near side in the first direction. However, the interfaces included in the power generation unit 40 may be located at separate positions in the accommodating space S. For example, interfaces, such as the electric interface 45 and the communication interface 46, related to electric power and communication may be located at positions different from the position where the fluid interface 42a is located.

When at least two interfaces are located at the same plane of the substantially cuboid accommodating space S, the work of attaching and detaching the interfaces by the worker can be facilitated. For example, it is preferable that two or more interfaces related to electricity be located at the same plane. It is preferable that the interface related to electricity be located at a position away from the radiator, the muffler, and the exhaust pipe which are heat generation sources of the internal combustion engine. Moreover, the power generation unit may include a fan that prevents heat from staying in the support structural body. The fan may be located so as to supply outside air to a space around the electrical components and a space around the interface related to electricity. The temperature increase of the electrical components and the interface related to electricity can be prevented by the fan. Moreover, to prevent the temperature increase of the power generation unit, a duct or fan which introduces outside air to a space around the power generation unit may be located at not the power generation unit but the installed target at which the power generation unit is located. The power generation units may be located at intervals. Thus, the heat of one of the power generation units is easily prevented from being transferred to the other power generation unit.

The shape of the guide rail is suitably selectable. The support structural body may be supported by one guide rail. For example, one guide rail may be located at a middle of the support structural body in the second direction. In this case, the support structural body may include a groove which extends in the first direction and can be fitted to the guide rail. Conversely, the guide rail may include a groove, and the support structural body may include a projection that is fitted to the groove of the guide rail.

The functionality of the elements disclosed herein may be implemented using circuitry or processing circuitry which includes general purpose processors, special purpose processors, integrated circuits, ASICs ("Application Specific Integrated Circuits"), conventional circuitry and/or combinations thereof which are configured or programmed to perform the disclosed functionality. Processors are considered processing circuitry or circuitry as they include transistors and other circuitry therein. The processor may be a programmed processor which executes a program stored in a memory. In the disclosure, the circuitry, units, or means are hardware that carry out or are programmed to perform the recited functionality. The hardware may be any hardware disclosed herein or otherwise known which is programmed or configured to carry out the recited functionality. When the hardware is a processor which may be considered a type of circuitry, the circuitry, means, or units are a combination of hardware and software, the software being used to configure the hardware and/or processor.

### Disclosed Aspects

The following aspects disclose preferred embodiments.

### First Aspect

A power generation unit including:
an internal combustion engine;
a power generator that generates electric power by an output of the internal combustion engine; and
a support structural body that supports both of the internal combustion engine and the power generator and includes a detachable structure that is attachable to and detachable from an attached body.

According to the above configuration, since the support structural body includes the detachable structure, the power generation unit can be detached from the attached body and subjected to maintenance. Moreover, the maintenance work of the power generation unit that is being attached to the attached body can be omitted. Therefore, the maintenance work of the power generation unit is easier than that of the internal combustion engine and the power generator since the internal combustion engine and the power generator need to be subjected to the maintenance work in a state where the internal combustion engine and the power generator are being attached to the attached body.

### Second Aspect

The power generation unit according to the first aspect, further including a fuel receiving port that introduces fuel from an outside of the power generation unit to the internal combustion engine, wherein
the fuel receiving port is supported by the support structural body.

According to the above configuration, since the internal combustion engine receives the fuel from an outside of the power generation unit, the power generation unit does not have to include a fuel tank.

### Third Aspect

The power generation unit according to the first or second aspect, further including:
electric equipment different from the power generator; and
an input connector through which electric power or a signal is input to the electric equipment from an outside, wherein
the input connector is supported by the support structural body.

According to the above configuration, since electric power or a signal can be input to the electric equipment of the power generation unit through the input connector from an outside, the power generation unit itself does not have to include a device that supplies the electric power or the signal to the electric equipment.

### Fourth Aspect

The power generation unit according to any one of the first to third aspects, further including a heat exchanger supported by the support structural body, wherein
the heat exchanger is located at an opposite side of an exhaust pipe across the internal combustion engine, the exhaust pipe being connected to an exhaust port of the internal combustion engine.

According to the above configuration, the heat exchanger can be located away from the exhaust pipe, and therefore, the transfer of the heat from the exhaust pipe to the heat exchanger can be suppressed.

### Fifth Aspect

The power generation unit according to any one of the first to fourth aspects, further including a heat exchanger supported by the support structural body, wherein
in the power generation unit that has been attached to the attached body, a lower end of the heat exchanger is located lower than an upper end of the internal combustion engine.

According to the above configuration, the heat transferred upward from the internal combustion engine can be prevented from being transferred toward the heat exchanger.

### Sixth Aspect

The power generation unit according to any one of the first to fifth aspects, further including:
an intake pipe which includes an intake opening and through which intake air taken in through the intake opening is introduced to the internal combustion engine; and
an exhaust pipe which includes an exhaust opening and through which an exhaust gas from the internal combustion engine is discharged through the exhaust opening to an outside, wherein
the intake opening is located at an opposite side of the exhaust opening across the internal combustion engine.

According to the above configuration, the exhaust gas discharged from the exhaust opening can be prevented from flowing into the intake opening.

### Seventh Aspect

The power generation unit according to any one of the first to sixth aspects, further including an exhaust pipe which includes an exhaust opening and through which an exhaust gas from the internal combustion engine is discharged through the exhaust opening to an outside, wherein
the power generator is located at an opposite side of the exhaust opening across the internal combustion engine.

According to the above configuration, the heat of the exhaust gas discharged from the exhaust opening can be prevented from being transferred to the power generator.

### Eighth Aspect

The power generation unit according to any one of the first to seventh aspects, further including:
an exhaust pipe which includes an exhaust opening and through which an exhaust gas from the internal combustion engine is discharged through the exhaust opening to an outside; and
control circuitry configured to control the power generator, wherein
the control circuitry is located at an opposite side of the exhaust opening across the internal combustion engine.

According to the above configuration, the heat of the exhaust gas discharged from the exhaust opening can be prevented from being transferred to the control circuitry.

### Ninth Aspect

The power generation unit according to any one of the first to eighth aspects, wherein the detachable structure includes:
an engaging portion that is engageable with an engaged portion of the attached body;
an operation piece that is supported by the support structural body and is displaceable between two positions that are a lock position and an unlock position; and
an association portion that makes the engaging portion associate with the displacement operation of the operation piece such that when the operation piece is at the lock position, the engaging portion and the engaged portion are engaged with each other, and when the operation piece is displaced from the lock position to the unlock position, the engaging portion and the engaged portion are disengaged from each other.

According to the above configuration, a state where the power generation unit is locked to the attached body and a state where the power generation unit is unlocked from the attached body can be switched through the association portion by changing the position of the operation piece operated by the worker.

For example, the detachable structure may include:
an engaging portion that is engageable with an engaged portion of the attached body;
a rotary member that is pivotally supported by the support structural body so as to be rotatable between the lock position and the unlock position;
a biasing member that is connected to the rotary member and, when the rotary member is at the lock position, generates biasing force that holds an engaged state between the engaging portion and the engaged portion, wherein
the detachable structure may be configured such that when the rotary member is rotated from the lock position to the unlock position against the biasing force, the engaged state between the engaging portion and the engaged portion is released.

According to the above configuration, the detachable structure of the power generation unit includes the rotary member that is rotated to release the engaged state between the engaging portion of the power generation unit and the engaged portion of the attached body. Therefore, the configuration of the attached body which is necessary for the attachment and detachment of the power generation unit can be simplified.

### Tenth Aspect

A power generation system including:
a power generation unit including
   an internal combustion engine,
   a power generator that generates electric power by an output of the internal combustion engine, and
   a support structural body that supports both of the internal combustion engine and the power generator and includes a detachable structure that is attachable to and detachable from an attached body; and
the attached body to and from which the power generation unit is attached and detached through the detachable structure.

According to the above configuration, since the support structural body includes the detachable structure, the power generation unit can be detached from the attached body and subjected to maintenance. Moreover, the maintenance work of the power generation unit that is being attached to the attached body can be omitted. Therefore, the maintenance work of the power generation unit is easier than that of the internal combustion engine and the power generator since the internal combustion engine and the power generator need to be subjected to the maintenance work in a state where the internal combustion engine and the power generator are being attached to the attached body.

### Eleventh Aspect

The power generation system according to the tenth aspect, wherein the attached body includes a guide rail that guides the power generation unit to a predetermined attachment position.

The power generation unit can be guided to the attachment position while being made to slide on the guide rail. Therefore, the power generation unit is easily positioned at the attachment position.

## Claims

1. A power generation unit comprising:
an internal combustion engine;
a power generator that generates electric power by an output of the internal combustion engine; and
a support structural body that supports both of the internal combustion engine and the power generator and includes a detachable structure that is attachable to and detachable from an attached body.

2. The power generation unit according to claim 1, further comprising a fuel receiving port that introduces fuel from an outside of the power generation unit to the internal combustion engine, wherein
the fuel receiving port is supported by the support structural body.

3. The power generation unit according to claim 1 or 2, further comprising:
electric equipment different from the power generator; and
an input connector through which electric power or a signal is input to the electric equipment from an outside, wherein
the input connector is supported by the support structural body.

4. The power generation unit according to claim 1 or 2, further comprising a heat exchanger supported by the support structural body, wherein
the heat exchanger is located at an opposite side of an exhaust pipe across the internal combustion engine, the exhaust pipe being connected to an exhaust port of the internal combustion engine.

5. The power generation unit according to claim 1 or 2, further comprising a heat exchanger supported by the support structural body, wherein
in the power generation unit that has been attached to the attached body, a lower end of the heat exchanger is located lower than an upper end of the internal combustion engine.

6. The power generation unit according to claim 1 or 2, further comprising:
an intake pipe which includes an intake opening and through which intake air taken in through the intake opening is introduced to the internal combustion engine; and
an exhaust pipe which includes an exhaust opening and through which an exhaust gas from the internal combustion engine is discharged through the exhaust opening to an outside, wherein
the intake opening is located at an opposite side of the exhaust opening across the internal combustion engine.

7. The power generation unit according to claim 1 or 2, further comprising an exhaust pipe which includes an exhaust opening and through which an exhaust gas from the internal combustion engine is discharged through the exhaust opening to an outside, wherein
the power generator is located at an opposite side of the exhaust opening across the internal combustion engine.

8. The power generation unit according to claim 1 or 2, further comprising:
an exhaust pipe which includes an exhaust opening and through which an exhaust gas from the internal combustion engine is discharged through the exhaust opening to an outside; and
control circuitry configured to control the power generator, wherein
the control circuitry is located at an opposite side of the exhaust opening across the internal combustion engine.

9. The power generation unit according to claim 1 or 2, wherein the detachable structure includes:
an engaging portion that is engageable with an engaged portion of the attached body;
an operation piece that is supported by the support structural body and is displaceable between two positions that are a lock position and an unlock position; and
an association portion that makes the engaging portion associate with the displacement operation of the operation piece such that when the operation piece is at the lock position, the engaging portion and the engaged portion are engaged with each other, and when the operation piece is displaced from the lock position to the unlock position, the engaging portion and the engaged portion are disengaged from each other.

10. A power generation system comprising:
a power generation unit including
an internal combustion engine,
a power generator that generates electric power by an output of the internal combustion engine, and
a support structural body that supports both of the internal combustion engine and the power generator and includes a detachable structure that is attachable to and detachable from an attached body; and
the attached body to and from which the power generation unit is attached and detached through the detachable structure.

11. The power generation system according to claim 10, wherein the attached body includes a guide rail that guides the power generation unit to a predetermined attachment position.
